(19)

**Europäisches Patentamt**
**European Patent Office**
**Office européen des brevets**

(11) **EP 4 675 404 A1**

(12) **EUROPEAN PATENT APPLICATION**

(43) Date of publication:
**07.01.2026   Bulletin 2026/02**

(21) Application number: **25186461.7**

(22) Date of filing: **30.06.2025**

(51) International Patent Classification (IPC):
***G06F 3/0354*** (2013.01)

(52) Cooperative Patent Classification (CPC):
**G06F 3/03545**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.07.2024   KR 20240086959**
**03.07.2024   KR 20240087303**

(71) Applicant: **Hideep Inc.**
**Seongnam-si, Gyeonggi-do 13493 (KR)**

(72) Inventors:
• **PAEK, Chongkuk**
  **13493 Gyeonggi-do (KR)**
• **KIM, Kiung**
  **13493 Gyeonggi-do (KR)**
• **BYUN, Mun Sub**
  **13493 Gyeonggi-do (KR)**
• **JUNG, Kiryoung**
  **13493 Gyeonggi-do (KR)**

(74) Representative: **HGF**
**HGF Europe LLP**
**Neumarkter Straße 18**
**81673 München (DE)**

(54) **STYLUS PEN AND METHOD FOR MANUFACTURING THE SAME**

(57)    The present disclosure relates to a stylus pen and a method for manufacturing the same, and more particularly, to a stylus pen that is miniaturized by using an inner empty space thereof to reduce an inner volume and a method for manufacturing the same. The present disclosure also relates to a stylus pen in which a resonance frequency of a resonance circuit is changed according to a movement of a core. A stylus pen according to an embodiment of the present disclosure includes a housing, a core having one end disposed outside the housing and the rest portion disposed in the housing and moved along a longitudinal direction by an external force applied to the one end, an inductor unit disposed in the housing, a capacitor unit disposed in the housing to form a resonance circuit with the inductor unit, a movable bracket disposed in the housing and disposed at the other end of the core to operate in conjunction with the core, and a magnetic body disposed in the movable bracket. Here, a movement of the movable bracket caused by a movement of the core changes at least one of a capacitance of the capacitor unit and an inductance of the inductor unit to change a resonance frequency of the resonance circuit.

**EP 4 675 404 A1**

**Description**

CROSS-REFERENCE TO RELATED APPLICATIONS

This US non-provisional patent application claims priority under 35 USC §119 of Korean Patent Application No. 10-2024-0086959, filed on July 2, 2024 and No. 10-2024-0087303, filed on July 3, 2024, the entire contents of which are hereby incorporated by reference.

BACKGROUND

The present disclosure relates to a stylus pen, and more particularly, to a stylus pen in which a resonance frequency of a resonance circuit is changed according to a movement of a core.

The present disclosure relates to a stylus pen and a method for manufacturing the same, and more particularly, to a stylus pen that is miniaturized by using an inner empty space thereof to reduce an inner volume and a method for manufacturing the same.

A stylus pen is a pen-shaped device capable of inputting data by lightly touching a screen while dragging or clicking on the screen. A user may use the stylus pen for a precise touch input.

The stylus pen may be classified into an active stylus pen and a passive stylus pen depending on whether the stylus pen includes a battery and an electronic component therein.

The active stylus pen has a disadvantage in that the pen is expensive and requires a power source such as a rechargeable battery. Thus, only small number of advanced users substantially use the active stylus pen.

Although the passive stylus pen has an advantage in that the passive stylus pen is inexpensive and does not require a battery in comparison with the active stylus pen, the passive stylus pen has a disadvantage in that the passive stylus pen is difficult to recognize a precise touch in comparison with the active stylus pen. In recent years, however, a technology for implementing the passive stylus pen capable of recognizing a precise touch is proposed. In particular, techniques based on a resonance method using an inductive change or a capacitive change is proposed to implement pressure, hovering, and button operations in LC resonance.

Although a conventional EMR method is excellent in writing and drawing quality that is a key function of the stylus pen, the EMR method has a disadvantage of having a great thickness and requiring more costs because a separate EMR sensor panel and a separate EMR driving IC are necessarily added in addition to a general touch sensor.

A resonance method through the capacitive change uses a general touch sensor and a general touch controller IC to improve a performance of the IC and support a pen touch without additional costs.

In the stylus pen using the EMR method or the resonance method through the capacitive change, a frequency of a driving signal is required to be matched with a resonance frequency of a resonance circuit disposed in the stylus pen so that a touch sensor more accurately distinguishes functions such as pressure and hovering. However, according to the conventional EMR method or the resonance method through the capacitive change, although the resonance frequency is matched with the frequency of the driving signal, a signal transmission is difficult because attenuation of the signal transmission is extremely great. As a result, a lot of attempts of many touch controller IC vendors have failed so far, and no companies have succeeded in mass production due to insufficient output signals.

Thus, a feature of how to design structures of an internal resonance circuit and a pen is a key factor to manufacture the stylus pen capable of producing maximum output signals using the EMR method or the resonance method through the capacitive change.

Also, in the EMR method or the capacitive resonance method, it is important to distinguish hover, contact, and pressure operations. Furthermore, the stylus pen having improved performance of distinguishing the hover and contact operations even at a low reference pressure.

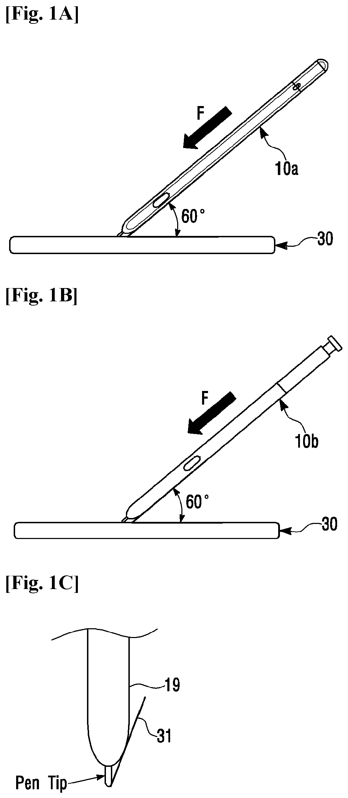

FIGS. 1A to 1C are views for explaining one requirement of a conventional stylus pen.

An outer design of the conventional stylus pen including stylus pens 10a and 10b in FIGS. 1A to 1C needs to satisfy a predetermined requirement in consideration of user's environments.

The predetermined requirement is that the conventional stylus pens 10a and 10b may perform a drawing in a state of being inclined at a predetermined angle (e.g., 60°) with a predetermined contact surface 31.

In particular, the conventional stylus pens 10a and 10b are required to perform a drawing even in a state of being inclined at a predetermined angle (e.g., 60°) as a pen tip is pressed such that, when the stylus pen contacts a surface of a display panel 300 and then a predetermined force F is applied, the pen tip is pressed, and a portion thereof is retracted into a housing 19.

As a result, when the conventional stylus pen 10a or 10b is inclined to the contact surface 31, an inclination of the predetermined angle (e.g., 60°) needs not to be disturbed by external components (e.g., housing 19) of the stylus pen 10a or 10b.

Also, since a user may precisely manipulate the pen when the stylus pen is miniaturized, precise touch input may be performed. Also, portability, usability, and storage convenience of the pen may be improved, and a weight of the pen may be reduced depending on cases. Thus, a feature of how to design an internal structure of the pen is also a key factor to reduce a volume of the pen.

SUMMARY

The present disclosure provides a stylus pen having improved performance of distinguishing hover, contact, pressure, and button operations.

The present disclosure also provide a stylus pen having improved performance of distinguishing a hover state and a contact state even at a low reference pressure.

The present disclosure also provides a stylus pen capable of reducing an inner volume by using an inner empty space.

The present disclosure also provides a method for stably manufacturing a stylus pen.

The present disclosure also provides a stylus pen capable of stably accommodating an inductor unit in a housing.

An embodiment of the present disclosure provides a stylus pen including: a housing; a core having one end disposed outside the housing and the rest portion disposed in the housing and moved along a longitudinal direction by an external force applied to the one end; an inductor unit disposed in the housing; a capacitor unit disposed in the housing to form a resonance circuit with the inductor unit; a movable bracket disposed in the housing and disposed at the other end of the core to operate in conjunction with the core; and a magnetic body disposed in the movable bracket, in which a movement of the movable bracket caused by a movement of the core changes at least one of a capacitance of the capacitor unit and an inductance of the inductor unit to change a resonance frequency of the resonance circuit.

In an embodiment, a factor that gives a dominant effect on a change in the resonance frequency of the resonance circuit, among a change in the capacitance and a change in the inductance of the inductor unit, may be determined based on a comparison between a magnitude of the external force applied to the one end of the core and a predetermined threshold.

In an embodiment, the stylus pen may further include: an elastic member; a conductive elastic body having an inner empty space and electrically connected to the capacitor unit; and a fixing bracket fixed in the housing, in which the fixing bracket may include at least one first electrode pattern, the movable bracket may include at least one second electrode pattern, at least a portion of the movable bracket and at least a portion of the elastic member may be disposed in the inner empty space of the elastic body, the elastic body may apply an elastic force to the movable bracket in an outward direction of the housing, and the predetermined threshold may be determined based on an elastic force generated by at least one of the elastic member and the elastic body.

In an embodiment, when a magnitude of the external force applied to the one end of the core is less than a predetermined threshold, the elastic force may form a contact between the first electrode pattern and the second electrode pattern, and, when the magnitude of the external force is equal to or greater than the predetermined threshold, the contact between the first electrode pattern and the second electrode pattern may be released according to a movement of the core.

In an embodiment, when the magnitude of the external force is equal to or greater than the predetermined threshold, a factor that gives a dominant effect on the change in the resonance frequency of the resonance circuit at a point in time when the contact between the first electrode pattern and the second electrode pattern is released according to the movement of the core may be the change in the capacitance.

In an embodiment, when the magnitude of the external force increases after the contact between the first electrode pattern and the second electrode pattern is released according to the movement of the core, a factor that gives a dominant effect on the change in the resonance frequency of the resonance circuit may be the change in the inductance.

In an embodiment, the stylus pen may further include: a substrate bracket fixed in the housing and coupled to the other end of the fixing bracket; and a substrate on which the capacitor unit that forms the resonance circuit with the inductor unit is disposed and which is mounted to the substrate bracket.

In an embodiment, the elastic body may have a spring shape, one end of the elastic body may be connected to the at least one first electrode pattern, the other end of the elastic body may be connected to a first terminal of the substrate, and the at least one second electrode pattern may be respectively connected to at least one second terminal of the substrate.

In an embodiment, the capacitor unit may include at least one capacitor and an auxiliary capacitor connected in parallel to one end of the at least one capacitor, the first terminal may be connected in series to the auxiliary capacitor, and the at least one second terminal may be connected in parallel to the other end of the at least one capacitor.

In an embodiment, when the magnitude of the external force is equal to or greater than the predetermined threshold, after the contact between the first electrode pattern and the second electrode pattern is released according to the movement of the core, a connection of the auxiliary capacitor may be disconnected.

In an embodiment, the second electrode pattern may be plated on a groove defined in an outer surface of the fixing bracket, and the first electrode pattern may be plated on a groove defined in an outer surface of the movable bracket.

In an embodiment, the second electrode pattern may have a shape having at least one bent portion.

In an embodiment, the stylus pen may further include a holder member disposed in the movable bracket and having elasticity, in which the holder member may have an inner space in which at least a portion of the core is disposed, and the movement of the movable bracket may be performed in conjunction with the movement of the core by the elasticity of the holder member.

In an embodiment of the present disclosure, a stylus pen includes: a housing; a core; a movable bracket disposed in the housing to operate in conjunction with one end of the core; an elastic member disposed in the housing and disposed at one side of the movable bracket; and an elastic body disposed in the housing and disposed between the movable bracket and the elastic member, in which the elastic body has an inner empty space, and at least a portion of the movable bracket and at least a portion of the elastic member are disposed in the inner empty space.

In an embodiment, at least a portion of the movable bracket may be brought into contact with the elastic member.

In an embodiment, the elastic body may be made of a conductive material and have a spring shape.

In an embodiment, the stylus pen may further include: a magnetic body disposed in the movable bracket to operate in conjunction with the movable bracket; and a holder member disposed in the movable bracket to operate in conjunction with the movable bracket and disposed between the movable bracket and the magnetic body to protect the magnetic body.

In an embodiment, each of the holder member and the magnetic body may have a through-hole through which the core passes.

In an embodiment, the holder member may surround one end of the core and be disposed between the one end of the core and the movable bracket to fix the core.

In an embodiment, the holder member may have elasticity.

In an embodiment, when an external force is applied to the core, the movable bracket may be moved in conjunction with the core.

In an embodiment, the external force may be greater than an elastic force of the elastic body.

In an embodiment, the elastic body and the elastic member may be pressed by the movement of the movable bracket.

In an embodiment, the stylus pen may further include an inductor unit disposed in the housing, in which, when the movable bracket is moved in conjunction with the core, a distance between the inductor unit and the magnetic body disposed in the movable bracket may be changed.

In an embodiment of the present disclosure, a method for manufacturing a stylus pen includes: a first mounting process of mounting a jig to a groove of a movable bracket; a second mounting process of mounting a holder member having a through-hole and a magnetic body having a through-hole to the movable bracket to which the jig is mounted; and a jig removal process of removing the mounted jig.

In an embodiment, the method may further include a core mounting process of mounting a core passing through the through-holes of the holder member and the holder member to the movable bracket.

In an embodiment, the core may have a width greater than that of the jig.

BRIEF DESCRIPTION OF THE FIGURES

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIGS. 1A to 1C are views for explaining one requirement of a conventional stylus pen;

FIG. 1D is a perspective view illustrating a stylus pen 100 according to an embodiment of the present disclosure;

FIG. 2 is a schematic view illustrating the internal structure of a stylus pen according to an embodiment of the present disclosure;

FIG. 3 is a perspective view illustrating a stylus pen 1000 according to another embodiment of the present disclosure;

FIG. 4 is a cross-sectional view illustrating a portion of the stylus pen 1000 in FIG. 3;

FIG. 5 is a perspective view illustrating a state in which a housing 1010 of the stylus pen 1000 in FIG. 3 is removed;

FIG. 6 is a perspective view illustrating only a fixing bracket 1600 in FIG. 5;

FIG. 7 is a perspective view illustrating the fixing bracket 1600 in FIG. 6 viewed from a different direction;

FIG. 8 is a perspective view illustrating a portion of FIG. 5 viewed from a different direction;

FIG. 9 is a perspective view illustrating a state in which an inductor unit 1200 and a fixing bracket 1600 in FIG. 5 are removed;

FIG. 10 is a perspective view illustrating FIG. 9 viewed from a different direction;

FIG. 11 is a cross-sectional view of FIG. 9;

FIGS. 12A and 12B are perspective views illustrating only an elastic member 1800 in FIG. 9;

FIG. 13 is a perspective view illustrating a substrate bracket 1900 and a substrate 2100 in FIG. 9;

FIGS. 14A and 14B are views for explaining a movement of a movable bracket 1300 according to a movement of a core 1020 in FIGS. 5 to 13 and an electrical contact and contact release between the fixing bracket 1600 and the movable bracket 1300;

FIGS. 15A and 15B are respective schematic views of FIGS. 14A and 14B;

FIGS. 16A to 16C are a schematic view illustrating a stylus pen according to another embodiment of the present disclosure and respective equivalent circuit diagrams of FIGS. 14A and 14B;

FIG. 17 is a perspective view illustrating the stylus pen 1000 in FIG. 3 according to another embodiment of the present disclosure viewed from the core 1020;

FIG. 18A is a partial cross-sectional view obtained by cutting the stylus pen 1000 along line A-A' in FIG. 17;

FIG. 18B is a partial cross-sectional view obtained by cutting the stylus pen 1000 along line B-B' in FIG. 17;

FIGS. 19A and 19B are views illustrating cross-sectional views and side views A and B of a ferrite core 1210 in FIGS. 17, 18A, and 18B;

FIGS. 20A to 20C are views for explaining an operation of the stylus pen 1000 in FIGS. 9 to 16C;

FIG. 21A is a graph showing, as an example, a change in a value of LC of a resonance circuit unit according to operations in FIGS. 20A to 20C, and FIG. 21B is a graph showing frequency characteristics in respective operation states in FIGS. 20A to 20C;

FIGS. 22A and 22B are views for explaining an elastic body 1700 and an elastic member 1800 in FIG. 9;

FIG. 23 is a cross-sectional view illustrating a portion of a stylus pen according to an embodiment of the present disclosure;

FIG. 24 is a detailed cross-sectional view illustrating an inductor unit 1200 of the stylus pen according to an embodiment of the present disclosure;

FIGS. 25A and 25B are views for explaining an internal configuration of the stylus pen according to an embodiment of the present disclosure and effects thereof;

FIGS. 26A to 26C are views for explaining in more detail the internal configuration of the stylus pen according to an embodiment of the present disclosure and effects thereof;

FIG. 27 is a view for explaining an amount of increase in magnitude of a pen signal according to a predetermined height S in FIGS. 26A to 26C;

FIG. 28 is a flowchart representing a method for manufacturing the stylus pen 1000 in FIG. 3;

FIG. 29 is a cross-sectional view illustrating a movable bracket 1300 disposed in the stylus pen 1000 in FIG. 3;

FIG. 30 is a view for explaining a first mounting process S1000 in in FIG. 28;

FIG. 31 is a view for explaining a second mounting process S1100 in FIG. 28;

FIG. 32 is a view for explaining a jig removal process S1300 in FIG. 28; and

FIG. 33 is a view for explaining a core mounting process S1500 in FIG. 28.

DETAILED DESCRIPTION

The present disclosure will now be described more fully with reference to the accompanying drawings, in which exemplary embodiments of the invention are shown. These embodiments are provided so that this disclosure will be thorough and complete, and will fully convey the concept of the invention to those skilled in the art. The invention may, however, be embodied in many different forms and should not be construed as being limited to the embodiments set forth herein. Therefore, it will be understood that the embodiments disclosed in this specification includes some variations without limitations to the shapes as illustrated in the figures. Also, the position or the arrangement of each component in the embodiment may be changed without departing form the spirit or scope of the invention. The preferred embodiments should be considered in descriptive sense only and not for purposes of limitation. Therefore, the scope of the invention is defined not by the detailed description of the invention but by the appended claims, and all differences within the scope will be construed as being included in the present disclosure. In the drawings, like reference numerals refer to like elements throughout.

Overall configuration of stylus pen

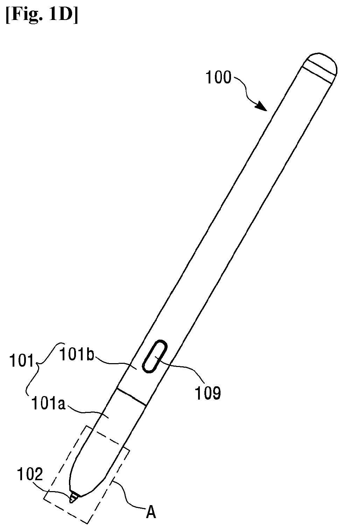

FIG. 1D is a perspective view illustrating a stylus pen 100 according to an embodiment of the present disclosure.
Referring to FIG. 1D, the stylus pen 100 according to an embodiment of the present disclosure includes a housing 101 and a core 102. The housing 101 forms an outer shape of the stylus pen 100. The housing 101 includes an inner predetermined space and has an elongated shape in one direction. The housing 101 may be formed such that two or more parts are coupled to each other or integrated into one part.

According to an embodiment of the present disclosure, the housing 101 may be made of a non-conductive synthetic resin material.

The housing 101 may include a first housing 101a and a second housing 101b. The first housing 101a and the second housing 101b may be coupled to each other to form the outer shape of the stylus pen 100. Various components are embedded in the first housing 101a and the second housing 101b.

A button unit 109 may be disposed on the housing 101. The button unit 109 may be disposed at a middle portion of an outer surface of the second housing 101b. The button unit 109 is designed to perform a specific operation of the stylus pen 100. For example, the button unit 109 may be a mechanical or touch-type button used for a cancel operation.

The core 102 includes one end disposed outside the housing 101, and the rest portion except for the one end is disposed in the housing 101. Here, the one end of the core 102 may be referred to as a pen tip.

One portion of the one end of the core 102 may be moved into the housing 101 by an external force applied from the outside. As the external force increases, a volume of the one portion of the one end of the core 102, which is moved into the housing 101, may increase. When the applied external force decreases, the one portion of the one end of the core 102 is moved out of the housing 101 by a mechanical operation of components in the housing 101. When the external force is not applied, the one portion of the one end of the core 102 is returned to an original state.

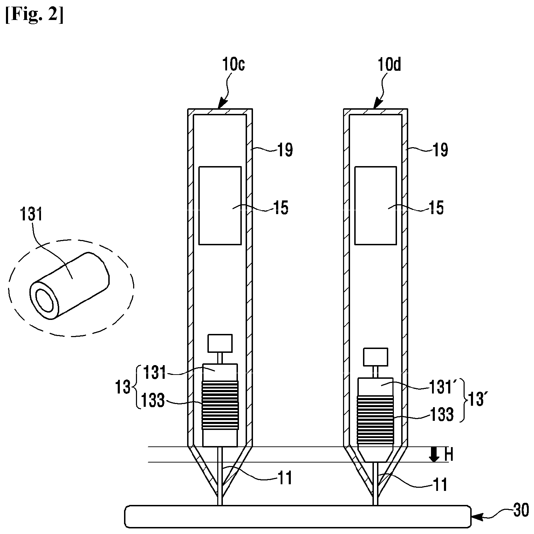

FIG. 2 is a schematic view illustrating an inner structure of a stylus pen according to an embodiment of the present disclosure.

A stylus pen 10c and 10d in FIG. 2 includes a pen tip 11, an inductor unit 13 and 13', a capacitor unit 15, and a housing 19. The stylus pen further includes other additional components in addition to the above-described components. The inductor unit 13 and 13' includes a ferrite core 131 and 131' and a coil 133. The pen tip 11 has a portion that is inserted into a through-hole of the ferrite core 131 and 131'. The inductor unit 13 and 13' and the capacitor unit 15 are electrically connected to form an LC resonance unit. The LC resonance unit may be resonated by a driving signal provided by a transmitter disposed outside the stylus pen 10c and 10d and emit a predetermined signal (hereinafter, referred to as a pen signal) by resonance.

The ferrite core 131' of the inductor unit 13' of the stylus pen 10d illustrated at a right side of FIG. 2 has a shape different from that of a ferrite core 131 of the inductor unit 13 in the stylus pen 10c illustrated at a left side. Specifically, a lower end of the ferrite core 131' of the stylus pen 10d illustrated at the right side has a shape (hereinafter, referred to as a taper shape) having a width that gradually decreases in a downward direction. Through the taper shape, the ferrite core 131' may be disposed closer to a lower end (or a pen tip) in the housing 19 by a predetermined distance H.

In the stylus pens 10c and 10d of FIG. 2, a magnitude of the pen signal received by a receiver disposed outside the stylus pen 10c and 10d may be changed according to a position of the inductor unit 13 and 13' in the housing 19. The position of the inductor unit 13 and 13' may be determined to maximize the magnitude of the pen signal.

Since the ferrite core 131' of the stylus pen 10d at the right side of FIG. 2 is disposed closer to the pen tip than the ferrite core 131 of the stylus pen 10c at the left side, the magnitude of the pen signal received by the receiver is relatively great. However, the taper shape of the ferrite core 131' of the stylus pen 10d has a limitation in maximizing the magnitude of the pen signal received by the receiver. Furthermore, while maximizing the magnitude of the pen signal received by the receiver, it is also required to stably accommodate the inductor unit 13 and 13' in the housing 19.

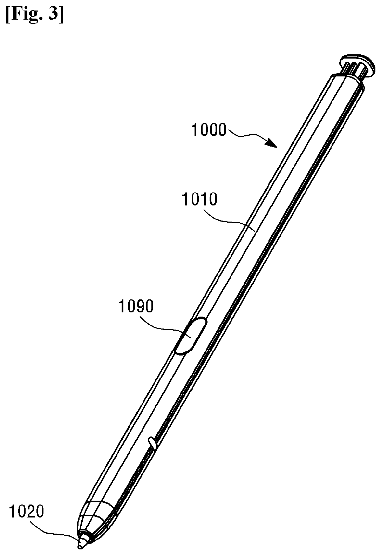

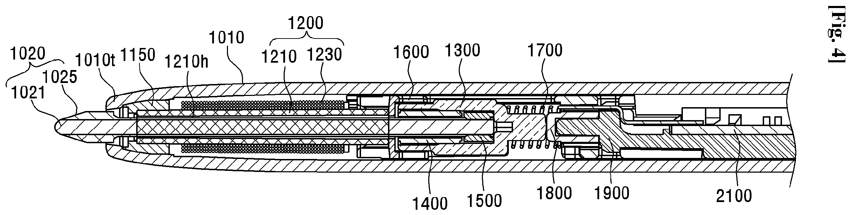

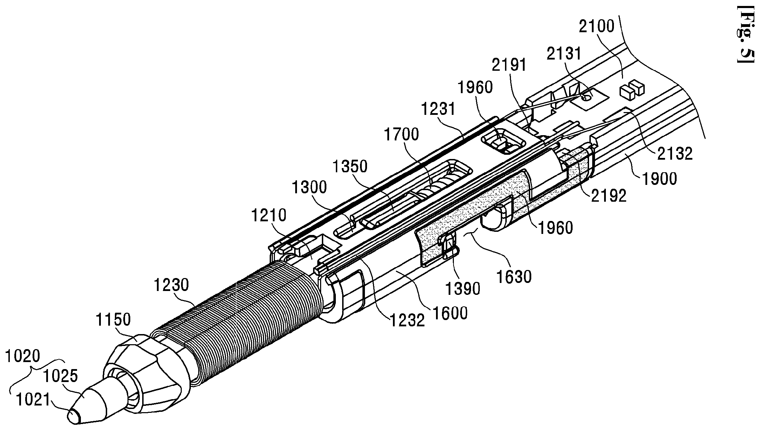

FIG. 3 is a perspective view illustrating a stylus pen 1000 according to an embodiment of the present disclosure, FIG. 4 is a cross-sectional view illustrating a portion of the stylus pen 1000 in FIG. 3, and FIG. 5 is a perspective view illustrating the stylus pen 1000 in FIG. 3, from which a housing 1010 is removed.

Referring to FIG. 3, the stylus pen 1000 according to an embodiment of the present disclosure includes a housing 1010 and a core 1020.

Referring to FIGS. 3 to 5, the housing 1010 forms an outer shape of the stylus pen 1000. The housing 1010 includes an inner predetermined space and has an elongated shape in one direction. The housing 1010 may be formed such that two or more parts are coupled to each other or integrated into one part.

According to an embodiment of the present disclosure, the housing 1010 may be made of a non-conductive synthetic resin material. A button unit 1090 may be disposed on the housing 1010. The button unit 1090 is designed to perform a specific operation of the stylus pen 1000. For example, the button unit 1090 may be a button for performing a cancel operation or a special function.

A core 1020 includes one end disposed outside the housing 1010, and the rest portion except for the one end is disposed in the housing 1010. Here, the one end of the core 1020 may be referred to as a pen tip.

The core 1020 may be made of a non-conductive resin material.

The core 1020 may include a base part 1021 and an outer part 1025. The base part 1021 has an elongated shape extending along a longitudinal direction of the stylus pen 1000. The outer part 1025 surrounds a side surface of the base part 1021. One end of the base part 1021 is exposed to the outside instead of being covered by the outer part 1025. The outer part 1025 is made of a relatively harder material than that of the base part 1021 to reinforce and protect the base part 1021.

One portion of the one end of the core 1020 may be moved into the housing 1010 by an external force applied from the outside. As the external force increases, a volume of the one portion of the one end of the core 1020, which is moved into the housing 1010, may increase. When the applied external force decreases, the one portion of the one end of the core 1020 is moved out of the housing 101 again. When the external force is not applied, the one portion of the one end of the core 1020 is returned to an original state.

A buffer member 1150 is disposed in the housing 1010 and disposed between one end of a ferrite core 1210 and an inner surface of the housing 1010. The buffer member 1150 may be disposed in a tapered portion 1010t of the housing 1010. Here, the tapered portion 1010t of the housing 1010, which is adjacent to the one end of the core 1020 among both ends of the housing 1010, has a shape having a width or diameter that gradually decreases in a direction toward an end of the one end of the housing 1010.

The buffer member 1150 has a conical or polygonal pyramid shape and includes a through-hole through which one end of the ferrite core 1210 and a body disposed between one end and the other end of the core 1020 pass. An inner surface that defines the through-hole may have a shape corresponding to an outer surface of the one end of the ferrite core 1210 and an outer surface of the body of the core 1020. Here, the body of the core 1020 refers to a portion, which is disposed in the through-hole of the ferrite core 1210, in the core 1020 having an elongated shape in one direction.

The buffer member 1150 may be made of an elastic material such as rubber to serve as a buffer between the ferrite core 1210 and the housing 1010. The above-described buffer member 1150 may block an electrical or magnetic effect from the outside.

The buffer member 1150 has a shape that surrounds one end of the ferrite core 1210.

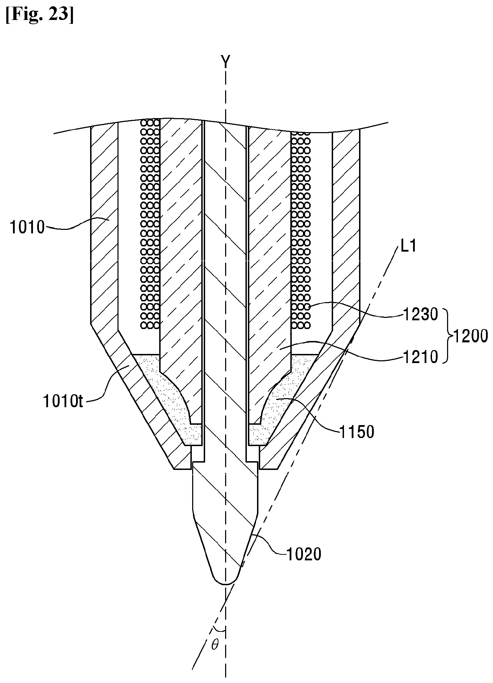

A virtual tangent line that contacts, in common, the tapered portion 1010t of the housing 1010 and the portion (or pen tip) disposed outside the housing in the core 102 forms a predetermined angle as illustrated in FIG. 23. Although the predetermined angle may be within 30°, the embodiment of the present disclosure is not limited thereto. According to an embodiment of the present disclosure, when the predetermined angle is less than 30°, drawing may be performed in a state in which the stylus pen according to an embodiment of the present disclosure is inclined at 60° based on a contact surface.

The inductor unit 1200 may constitute an LC resonance unit with a capacitor unit (not shown). A resonance frequency may be set by a value of inductance L of the inductor unit 1200 and a value of capacitance C of the capacitor unit (not shown). The resonance frequency may be changed according to variation in the value of the inductance L of the inductor unit 1200 and/or the value of the capacitance C of the capacitor unit (not shown).

The inductor unit 1200 includes a ferrite core 1210 and a coil 1230 wound around an outer surface of the ferrite core 1210.

The ferrite core 1210 may have an overall cylindrical, elliptical, or polygonal container shape, and a through-hole 1210h that passes through the inside of the ferrite core 1210 may be formed along a longitudinal direction of the ferrite core 121.

The ferrite core 1210 has the through-hole 1210h through which the body of the core 1020 passes. The body of the core 1020 may perform a linear reciprocating movement along the longitudinal direction through the through-hole 1210h.

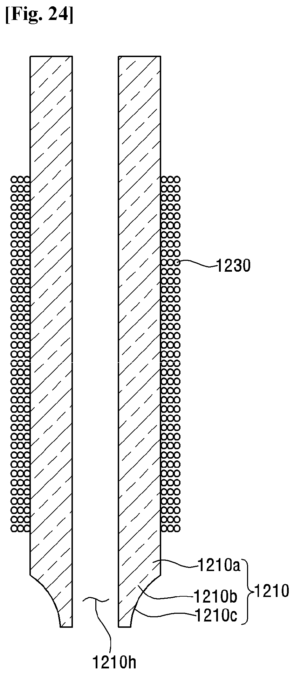

One end of the ferrite core 1210 may have a tapered shape having a diameter or width that gradually decreases in a direction toward an end thereof. Here, as illustrated in FIG. 24, an outer surface of the one end having the tapered shape may include at least one curved portion 1210c that is curved inward. As illustrated in FIG. 24, the ferrite core 1210 may include an upper end 1210a and a lower end 1210b disposed below the upper end 1210a. Here, the upper end 1210a and the lower end 1210b may be integrated with each other.

The coil 1230 may be wound around the ferrite core 1210 with at least one layer. The coil 1230 is electrically connected to a substrate 2100. The coil 1230 may include a first connection part 1231 and a second connection part 1232, which are for being connected to the substrate 2100. The first connection part 1231 is disposed on a fixing bracket 1600 and has one end that is electrically connected to a first terminal 2131 of the substrate 2100. The second connection part 1232 is disposed on the fixing bracket 1600 and has one end that is electrically connected to a second terminal 2132 of the substrate 2100. Here, the fixing bracket 1600 may have a groove in which each of the first connection part 1231 and the second connection part 1232 is disposed. The groove may be formed along the longitudinal direction of the stylus pen 1000 in an outer surface of the fixing bracket 1600. The groove may guide the first connection part 1231 and the second connection part 1232 of the coil 1230 and protect the first connection part 1231 and the second connection part 1232 from an external impact.

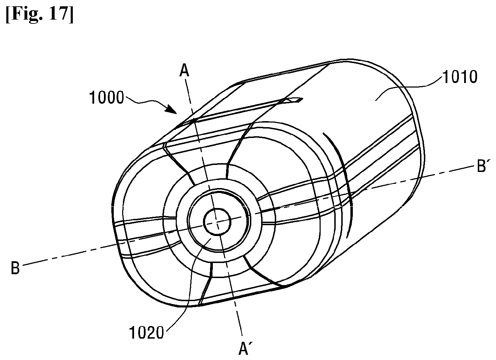

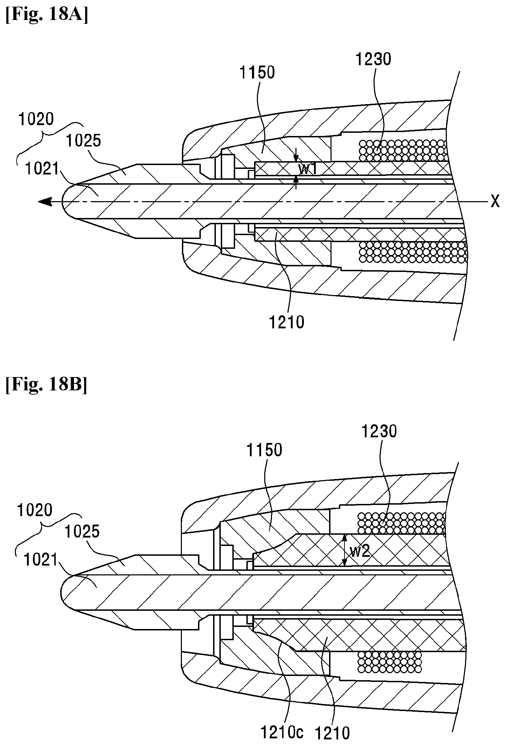

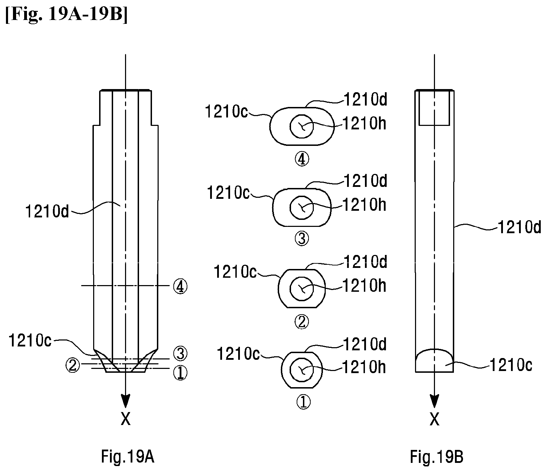

FIG. 17 is a perspective view illustrating the stylus pen 1000 FIG. 3 according to another embodiment of the present disclosure viewed from the core 1020, FIG. 18A is a partial cross-sectional view taken along line A-A' of the stylus pen 1000 in FIG. 17, FIG. 18B is a partial cross-sectional view taken along line B-B' of the stylus pen 1000 in FIG. 17, and FIGS. 19A and 19B are views illustrating side views and cross-sectional views (①, ②, ③, and ④) of the ferrite core 1210 in FIGS. 17, 18A, and 18B.

Referring to FIGS. 5 and 17 to 19B, the housing 1010 of the stylus pen 1000 has a rectangular container shape having rounded corners, and an exposed portion of the core 1020 from the housing 1010 has a width that gradually decreases in an outward direction.

Components disposed in the housing 1010 have shapes corresponding to the shape of the housing 1010 according to an outer shape of the housing 1010. Among the internal components, the ferrite core 1210 of the inductor unit 1200 also has an optimized structure corresponding to the outer shape of the housing 1010.

As illustrated in FIGS. 18A and 18B, in the ferrite core 1210, a first cross-sectional shape taken along a first vertical direction (A-A' direction in FIG. 17) perpendicular to an axial direction X of the ferrite core 1210 is different from a second cross-section shape taken along a second vertical direction (B-B' direction in FIG. 17). Specifically, a width w1 of the ferrite core 1210 in the first vertical direction is different from a width w2 in the second vertical direction. More specifically, the width w1 in the first vertical direction is less than the width w2 in the second vertical direction.

The ferrite core 1210 has a flat cylindrical shape. A flat portion 1210d may be disposed on at least a portion of the outer surface of the ferrite core 1210. A flat portion corresponding to the flat portion 1210d may be disposed on another portion of the outer surface of the ferrite core 1210. The ferrite core 1210 may be stably disposed in the housing 1010 by the flat portion 1210d. The flat portion 1210d extends from one end to the other end of the ferrite core 1210 along the axial direction X of the ferrite core 1210.

One end of the ferrite core 1210 may include at least two curved portions 1210c. The curved portion 1210c may be curved from one side surface of one end of the ferrite core 1210 to a portion adjacent to the through-hole 1210h of the ferrite core 1210. The curved portion 1210c may be disposed on each of both sides opposed to each other at one end of the ferrite core 1210 based on the through-hole 1210h.

As illustrated in ①, ②, and ③ of FIG. 19A, the curved portion 1210c is changed in shape from an aspherical shape to a spherical shape along the axial direction X of the ferrite core 1210. ③ of FIG. 19A shows the curved portion 1210c having an aspherical shape, and ① of FIG. 19A shows the curved portion 1210c having a spherical shape. Also, ② of FIG. 19A shows the curved portion 1210c having an intermediate shape between the aspherical shape and the spherical shape.

At one end of the ferrite core 1210, the flat portion 1210d has a shape having a width that gradually decreases along the axial direction X of the ferrite core 1210. Here, the width of the flat portion 1210d may decrease non-linearly.

When the above-described ferrite core 1210 is used, the inductor unit 1200 including the ferrite core 1210 may be disposed closer to a tip of the stylus pen 1000 in the stylus pen 1000. Thus, since the inductor unit 1200 may be disposed relatively closer to the receiver (not shown), the pen signal received by the receiver may increase.

Internal configuration of stylus pen

Fixing bracket 1600

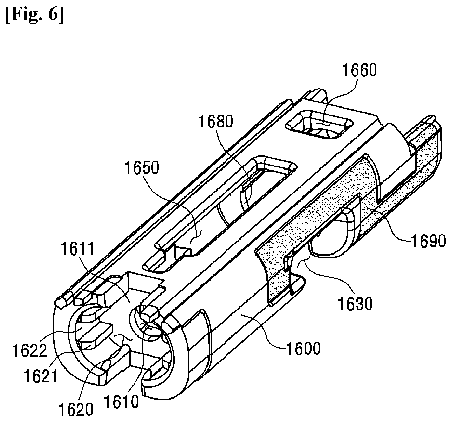

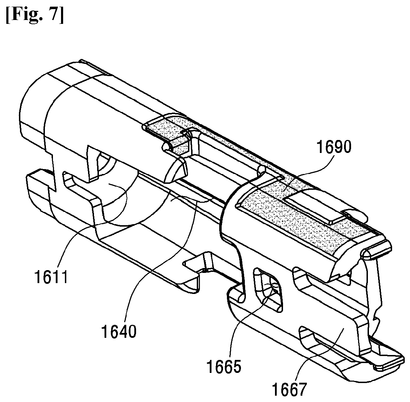

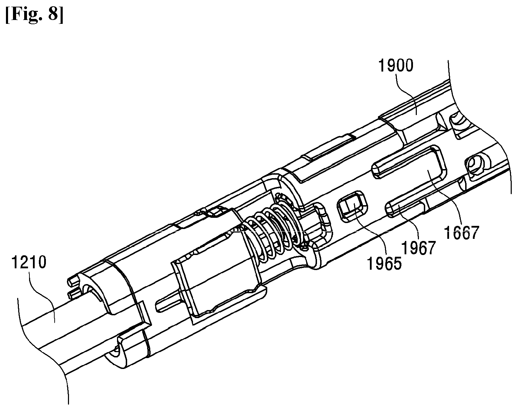

FIG. 6 is a perspective view illustrating only the fixing bracket 1600 in FIG. 5, FIG. 7 is a perspective view illustrating the fixing bracket 1600 in FIG. 6 viewed from another direction, and FIG. 8 is a perspective view illustrating a portion of FIG. 5 viewed from another direction.

Referring to FIGS. 5 to 8, the fixing bracket 1600 is fixed in the housing 1010. The fixing bracket 1600 may be disposed between the inductor unit 1200 and the substrate bracket 1900 in the housing 1010. The fixing bracket 1600 may have one end coupled to the inductor unit 1200 and the other end coupled to the substrate bracket 1900.

The one end of the fixing bracket 1600 may include an insertion groove 1620 into which the other end of the ferrite core 1210 of the inductor unit 1200 is inserted. The insertion groove 1620 may be defined by a first partition wall 1611 and an inner wall 1622 of the fixing bracket 1600.

The first partition wall 1611 may contact the other end of the ferrite core 1210, and the first partition wall 1611 has a through-hole 1610 through which the core 1020 passes.

The inner wall 1622 may include a plurality of protrusions 1621 that protrude into the insertion groove 1620. The plurality of protrusions 1621 may contact an outer surface of the other end of the ferrite core 1210 to hold a position of the ferrite core 1210.

The other end of the fixing bracket 1600 may include latch holes 1660 and 1665 into which latch parts 1960 and 1965 of the substrate bracket 1900 are inserted. At least one latch hole 1660 and 1665 may be provided. Alternatively, as illustrated in the drawing, one latch hole may be defined at an upper side of the fixing bracket 1600, and one latch hole may be defined at a lower side of the fixing bracket 1600. As the latch part 1960 of the substrate bracket 1900 is coupled to the latch hole 1660, the fixing bracket 1600 may be coupled to the substrate bracket 1900.

The other end of the fixing bracket 1600 may include a guide protrusion 1667. The guide protrusion 1667 may extend along a longitudinal direction of the fixing bracket 1600. The guide protrusion 1667 may be coupled with a guide part 1967 of the substrate bracket 1900. As the guide protrusion 1667 is coupled to the guide part 1967 of the substrate bracket 1900, the fixing bracket 1600 may be arranged along the longitudinal direction of the stylus pen 1000.

The other end of the fixing bracket 1600 may include a second partition wall 1680. The second partition wall 1680 fixes a position of an elastic member 1800 together with the substrate bracket 1900. That is, the elastic member 1800 may be fixedly mounted between the second partition wall 1680 and the substrate bracket 1900.

The fixing bracket 1600 surrounds a movable bracket 1300, an elastic body 1700, and the elastic member 1800. The fixing bracket 1600 may have an inner accommodation space 1640 in which the movable bracket 1300, the elastic body 1700, and the elastic member 1800 are accommodated. The movable bracket 1300 may perform a linear reciprocating movement in the accommodation space 1640 of the fixing bracket 1600,

The fixing bracket 1600 may include two or more electrode patterns 1690. The electrode patterns 1690 may be disposed on both outer surfaces of the fixing bracket 1600, respectively. The electrode patterns 1690 may be plated on the outer surface of the fixing bracket 1600 made of a non-conductive material. For example, the electrode patterns 1690 may be formed on the outer surface of the non-conductive fixing bracket by using a laser direct structuring (LDS) and a laser manufacturing antenna (LMA).

The electrode pattern 1690 may be disposed around the guide groove 1630 of the fixing bracket 1600 and have a concave-convex shape or a '⊐'-shape. However, the embodiment of the present disclosure is not limited thereto. For example, the electrode pattern 1690 may be implemented in a shape having a greater or lesser number of bent portions. The electrode pattern 1690 may have one end that is in contact with or spaced a predetermined distance from an electrode pattern 1390 of the movable bracket 1300 and the other end that is electrically connected to terminals 2191 and 2192 of the substrate 2100.

According to a movement of the movable bracket 1300 synchronized with a movement of the core 1020, the electrode pattern 1690 may be in contact with or spaced at a predetermined distance from the electrode pattern 1390 of the movable bracket 1300. This will be explained later with reference to another drawing.

Movable bracket 1300

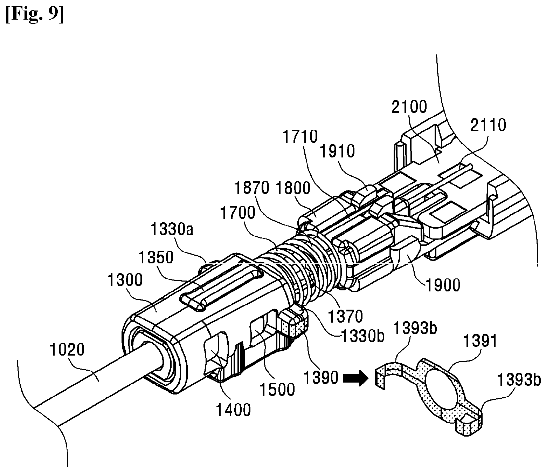

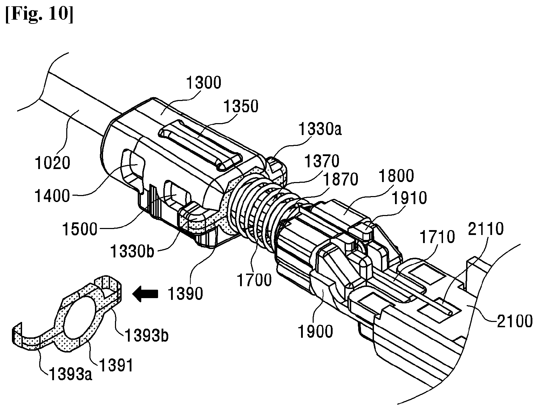

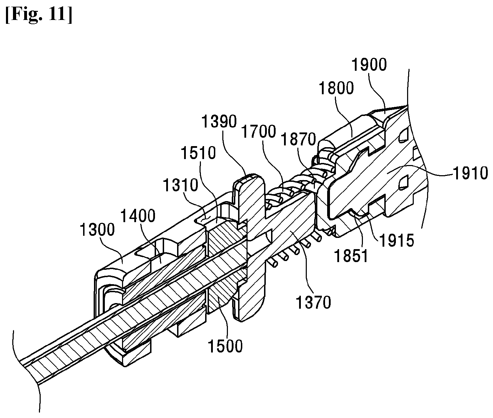

FIG. 9 is a perspective view illustrating the stylus pen 1000 from which the inductor unit 1200 and the fixing bracket 1600 in FIG. 5 are removed, FIG. 10 is a perspective view of FIG. 9 viewed from another direction, and FIG. 11 is a cross-sectional view of FIG. 9.

Referring to FIGS. 4 to 11, the movable bracket 1300 is moved in synchronization with the core 1020. When one end of the core 1020 receives an external force from the outside, the core 1020 is moved into the housing 1010, and the movable bracket 1300 is moved together with the core 1020.

The movable bracket 1300 accommodates the other end of the core 1020, the magnetic body 1400, and the holder member 1500. The movable bracket 1300 may include an accommodation part for accommodating the other end of the core 1020, the magnetic body 1400, and the holder member 1500.

In the accommodation part, the magnetic body 1400 and the holder member 1500 surround the other end of the core 1020. To this end, the magnetic body 1400 may have a container shape with a through-hole through which the other end of the core 1020 passes, and the holder member 1500 may have a container shape with a through-hole through which the other end of the core 1020 passes.

The magnetic body 1400 includes a magnetic material and is moved in synchronization with movements of the core 1020 and the movable bracket 1300. The movements of the core 1020 and the movable bracket 1300 causes a movement of the magnetic body 1400, and the movement of the magnetic body 1400 causes a change in a distance between the magnetic body 1400 and the inductor unit 1200 that is fixed in the housing 1010. An inductance of the inductor unit 1200 is changed by the change in the distance.

The movable bracket 1300 may include a first protrusion 1330a and a second protrusion 1330b. The first protrusion 1330a and the second protrusion 1330b may protrude in an outward direction from the outer surface of the movable bracket 1300 or in a direction perpendicular to the longitudinal direction of the stylus pen 1000. The first protrusion 1330a and the second protrusion 1330b may be disposed in the guide hole 1630 of the fixing bracket 1600 in FIG. 5. When the movable bracket 1300 is moved in synchronization with the movement of the core 1020, the first protrusion 1330a and the second protrusion 1330b may be moved along the guide hole 1630 of the fixing bracket 1600.

The movable bracket 1300 may include a third protrusion 1350. The third protrusion 1350 may protrude in an outward direction from the outer surface of the movable bracket 1300 or in a direction perpendicular to the longitudinal direction of the stylus pen 1000. The third protrusion 1350 may be disposed in the guide hole 1650 of the fixing bracket 1600 in FIG. 5. When the movable bracket 1300 is moved in synchronization with the movement of the core 1020, the third protrusion 1350 may be moved along the guide hole 1650 of the fixing bracket 1600.

The movable bracket 1300 may include an extension part 1370. The extension part 1370 may extend along the longitudinal direction of the stylus pen 1000 from the outer surface of the movable bracket 1300. Alternatively, the extension part 1370 may extend along the longitudinal direction of the core 1020 from the outer surface of the movable bracket 1300. The extension part 1370 may have a structure and a shape to be disposed in the elastic member 1700. An extension part 1870 of the elastic member 1800 may be disposed on an end of the extension part 1370.

The movable bracket 1300 may include an electrode pattern 1390. The electrode pattern 1390 may be disposed on the outer surface of the movable bracket 1300, on which the extension part 1370 is formed, among the outer surfaces of the movable bracket and on the first and second protrusions 1330a and 1330b.

The electrode pattern 1390 may be in contact with and electrically connected to the elastic body 1700 surrounding the extension part 1370 of the movable bracket 1300. The electrode pattern 1390 may be in contact with and electrically connected to the electrode pattern 1690 of the fixing bracket 1600 in FIG. 5, and detached and electrically disconnected from the electrode pattern 1690 of the fixing bracket 1600 by the movement of the core 1020.

The electrode pattern 1390 may be plated on the outer surface of the movable bracket 1300 made of a non-conductive material. For example, the electrode pattern 1390 may be formed on the outer surface of the non-conductive movable bracket 1300 by using the LDS and the LMA.

The electrode pattern 1390 may include a base electrode pattern 1391 and first and second extension patterns 1393a and 1393b.

The base electrode pattern 1391 may be disposed on the outer surface of the movable bracket 1300 to surround the extension part 1370 of the movable bracket 1300. The base electrode pattern 1391 contacts one end of the elastic member 1700.

The first and second extension patterns 1393a and 1393b may extend respectively from both sides of the base electrode pattern 1391, the first extension pattern 1393a may be disposed on the first protrusion 1330a, and the second extension pattern 1393b may be disposed on the second protrusion 1330b. The first and second extension patterns 1393a and 1393b may contact the electrode pattern 1690 of the fixing bracket 1600 in FIG. 5 or may be separated therefrom by the movement of the core 1020.

According to another embodiment of the present disclosure, the movable bracket 1300 may further include additional protrusion (not shown) in addition to the first protrusion 1330a and the second protrusion 1330b, and the base electrode pattern 1391 may include one or more additional extension patterns (not shown) in addition to the first and second extension patterns 1393a and 1393b. For example, when the base electrode pattern 1391 includes two additional extension patterns in addition to the first and second extension patterns 1393a and 1393b, the two additional extension patterns may respectively extend to the upper and lower portions of the base electrode pattern 1391 and may be respectively disposed on the additional protrusions (not shown). When the base electrode pattern 1391 includes a plurality of extension patterns as described above, although some of the extension patterns are not in contact with the electrode pattern 1690 of the fixing bracket 1600, at least a portion of the rest extension patterns may be still in contact with the electrode pattern 1690. Thus, a hover state and a contact state may be clearly distinguished without error.

Also, according to an embodiment of the present disclosure, the electrode pattern 1390 of the movable bracket 1300, which is in contact with and electrically connected to the electrode pattern 1690 of the fixing bracket 1600, may be implemented in a shape of a plated electrode pattern instead of a wire shape. When the electrode is implemented in a wire shape and electrically connected, unintended electrical disconnection may occur due to a defect such as wire breakage. In contrast, when the electrode pattern 1390 of the movable bracket 1300 is brought into contact with the electrode pattern 1690 disposed on the outer surface of the fixing bracket 1600, the above-described unintended electrical disconnection may be prevented.

Holder member 1500

The holder member 1500 that surrounds the other end of the core 1020 may fix the core 1030 to the movable bracket 1300 so that the movable bracket 1300 is moved in synchronization with the core 1020.

The holder member 1500 may include an elastic material and be inserted between the other end of the core 1020 and the movable bracket 1300. Since the holder member 1500 surrounds the other end of the core 1020 that passes the through-hole of the holder member 1500, the holder member 1500 may fix the core 1020 to the inside of the movable bracket 1300. The holder member 1500 may protect the other end of the core 1020. Since the holder member 1500 is inserted between the other end of the core 1020 and the movable bracket 1300, the movable bracket 1300 may be synchronized with the movement of the core 1020. Accordingly, when an external force is applied to the core 1020, the movable bracket 1300 may be also moved in conjunction with the core 1020.

The holder member 1500 may be disposed between the movable bracket 1300 and the magnetic body 1400.

As illustrated in FIG. 11, the holder member 1500 may include a protrusion 1510 that protrudes from an outer surface thereof to the outside. The protrusion 1510 may be inserted into an insertion groove 1310 defined in the movable bracket 1300. The holder member 1500 may be stably fixed to the movable bracket 1300 by the protrusion 1510 of the holder member 1500 and the insertion groove 1310 of the movable bracket 1300, and thus the other end of the core 1020 may be fixed to the movable bracket 1300.

In the stylus pen according to an embodiment of the present disclosure, since the core 1020 is fixed to the movable bracket 1300 by the holder member 1500, when the core 1020 is moved as a force is applied to one end of the core 1020, the movable bracket 1300 is also moved together, and the electrode pattern 1390 included in the movable bracket 1300 is moved together. Accordingly, since the movement of the core 1020 and the movement of the electrode pattern 1390 are synchronized, there is an effect of reducing an error in operation of the electrical contact and contact release between the electrode pattern 1390 of the movable bracket 1300 and the electrode pattern 1690 of the fixing bracket 1600 caused by the movement of the core 1020.

Elastic body 1700

The elastic body 1700 may be made of a conductive material and have a spring shape. The elastic body 1700 may be disposed between the movable bracket 1300 and the elastic member 1800. Here, the elastic body 1700 in a partially pressed state instead of a completely pressed state may be inserted between the movable bracket 1300 and the elastic member 1800. When an external force applied to the movable bracket 1300 synchronized with the movement of the core 1020 is less than an elastic force of pushing outward from the partially pressed elastic body 1700, the elastic member 1700 is not pressed. When the external force is greater than the elastic force, the elastic body 1700 is initiated to be pressed. Accordingly, the core 1020 and the movable bracket 1300 are moved in conjunction with each other only when the external force greater than the elastic force is applied to the one end of the core 1020. That is, the elastic force of pushing outward from the partially pressed elastic body 1700 may be a predetermined threshold for a comparison with the external force applied to the core 1020.

The elastic body 1700 may include an inner empty space, and the extension part 1370 of the movable bracket 1300 and the extension part 1870 of the elastic member 1800 may be disposed together in the inner space of the elastic body 1700. As at least a portion of the movable bracket 1300 and at least a portion of the elastic member 1800 are disposed in the inner empty space of the elastic body 1700, there is an advantage in that an inner volume of the stylus pen 1000 may be reduced by using the inner space of the elastic body 1700.

When the core 1020 and the movable bracket 1300 receive the external force and are moved in conjunction with each other, the elastic body 1700 and the elastic member 1800 may be pressed. Specifically, as the core 1020 and the movable bracket 1300 are moved in a direction toward the elastic body 1700, the elastic body 1700 may be pressed further than the partially pressed state. As the elastic body 1700 is further pressed, a volume of the inner empty space may decrease, and the extension part 1870 of the elastic member 1800, which is disposed in the inner empty space of the elastic body 1700, may be also pressed.

The elastic body 1700 has one end electrically connected to the electrode pattern 1390 of the movable bracket 1300 and the other end electrically connected to the terminal 2110 of the substrate 2100. The elastic body 1700 may include a connecting wire 1710 that connects the elastic body 1700 and the terminal 2110 of the substrate 2100. The connecting wire 1710 may have one end connected to the elastic body 1700 and the other end connected to the terminal 2110 of the substrate 2100. Each of the elastic member 1800 and the substrate bracket 1900 may have a guide groove in which the connecting wire 1710 is disposed in order to protect and guide the connecting wire 1710.

Elastic member 1800

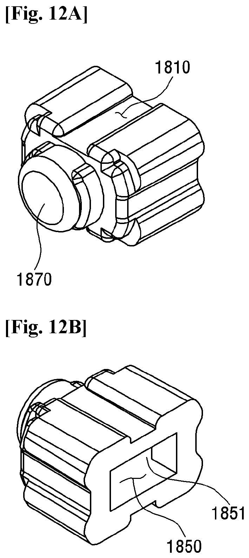

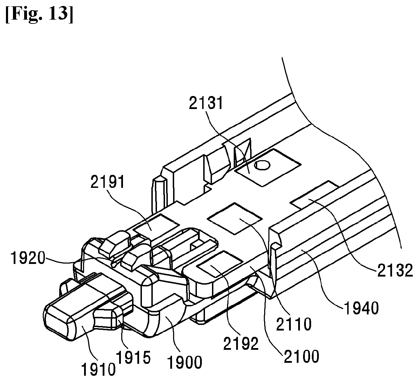

FIGS. 12A and 12B are perspective views illustrating only the elastic member 1800 in FIG. 9, and FIG. 13 is a perspective view illustrating the substrate bracket 1900 and the substrate 2100 in FIG. 9.
Referring to FIGS. 6 to 13, the elastic member 1800 may include the extension part 1870. The extension part 1870 may extend in a direction from an outer surface of the elastic member 1800 to the movable bracket 1300. The extension part 1870 may be disposed in the inner empty space of the elastic body 1700. As the extension part 1870 of the elastic member 1800 is brought into contact with the extension part 1370 of the movable bracket 1300, the elastic member 1800 and the movable bracket 1300 may be brought into contact with each other.
The elastic member 1800 may include a guide groove 1810. The guide groove 1810 may be formed along the longitudinal direction of the stylus pen 1000 on the outer surface of the elastic member 1800. An extension line 1710 of the elastic body 1700 may be disposed in the guide groove 1810.
The elastic member 1800 may include a mounting groove 1850. The mounting groove 1850 is defined in the outer surface of the elastic member 1800. The mounting groove 1850 may be disposed at a side opposed to the extension part 1870. A mounting part 1910 of the substrate bracket 1900 may be inserted into the mounting groove 1850. A latch groove 1851 having a shape corresponding to a protrusion 1915 of the mounting part 1910 of the substrate bracket 1900 may be defined in the mounting groove 1850. Through this, the elastic member 1800 may be stably fixed and mounted to the substrate bracket 1900.
The elastic member 1800 is made of a nonconductive material and has a predetermined elasticity. For example, the elastic member 1800 may be made of rubber. The elastic member 1800 may be disposed in alignment with the core 1020 and the movable bracket 1300 and disposed between the movable bracket 1300 and the substrate bracket 1900 at one side of the movable bracket 1300.

Substrate bracket 1900 and substrate 2100

Referring to FIGS. 5 and 13, the substrate 2100 is disposed on the substrate bracket 1900.
The substrate bracket 1900 supports the substrate 2100 in the housing 1010 and is coupled with the elastic member 1800 to support the elastic member 1800.
The substrate bracket 1900 may include a side part 1940 that guides and supports a side portion of the substrate 2100.

The substrate bracket 1900 may include a mounting part 1910 for being coupled with the elastic member 1800. The mounting part 1910 protrudes in a direction from the substrate bracket 1900 to the movable bracket 1300. The mounting part 1910 may include a protrusion 1915 that protrudes from an outer surface thereof. The protrusion 1915 may protrude in a direction perpendicular to a direction in which the mounting part 1910 protrudes.

The substrate bracket 1900 may include a guide groove 1920. The guide groove 1920 may guide and protect the connecting wire 1710 of the elastic member 1700.

The substrate 2100 may include a plurality of terminals 2110, 2131, 2132, 2191, and 2192. Among the plurality of terminals 2110, 2131, and 2132, the terminal 2110 is electrically connected to the elastic body 1700, and first and second terminals 2131 and 2132 are electrically connected to the coil 1230 of the inductor unit 1200. Third and fourth terminals 2191 and 2192 are electrically connected to electrode patterns 1690 disposed on both outer surfaces of the fixing bracket 1600, respectively.

The substrate 2100 includes a capacitor unit (not shown). One or more capacitors that constitute the capacitor unit (not shown) may be arranged on the substrate 2100.

The substrate 2100 may include a circuit pattern that electrically connects the one or more capacitors of the capacitor unit (not shown) and the plurality of terminals 2110, 2131, and 2132.

Operation of internal component according to movement of core

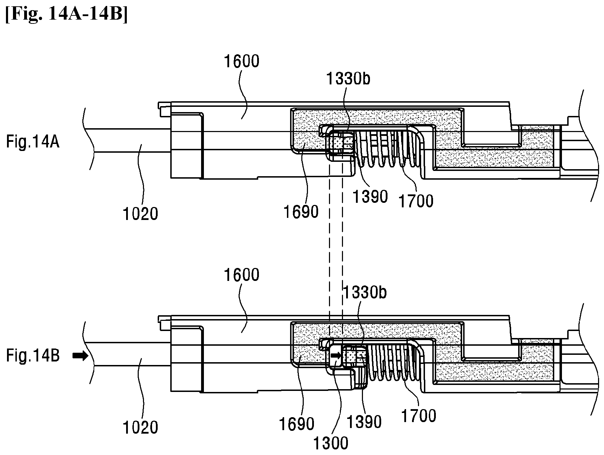

FIGS. 14A and 14B are views for explaining the movement of the movable bracket 1300 according to the movement of the core 1020 and the electrical contact and contact release between the fixing bracket 1600 and the movable bracket 1300 in FIGS. 5 to 13.

FIG. 14A illustrates a case when any external force is not applied to the core 1020, and FIG. 14B illustrates a case when a predetermined external force is applied to the core 1020 to move the movable bracket 1300 in one direction.

First, referring to FIG. 14A, when any external force is not applied to the core 1020, the electrode pattern 1390 of the movable bracket 1300 is brought into contact with the electrode pattern 1690 of the fixing bracket 1600. That is, the electrode pattern 1390 of the movable bracket 1300 and the electrode pattern 1690 of the fixing bracket 1600 are electrically connected to each other.

The elastic body 1700 in a partially pressed state may be inserted between the movable bracket 1300 and the elastic member 1800. As the second protrusion 1330b of the movable bracket 1300 is pushed toward the core 1020 by the partially pressed elastic body 1700, a state in which the electrode pattern 1390 disposed on an outer surface of the second protrusion 1330b is in contact with the electrode pattern 1690 of the fixing bracket 1600 may be maintained.

When an external force applied to the movable bracket 1300 synchronized with the movement of the core 1020 is less than an elastic force by which the partially pressed elastic body 1700 pushes the movable bracket 1300 in an outward direction, the elastic body 1700 is not pressed, and the electrical connection between the electrode pattern 1390 and the electrode pattern 1690 is not disconnected. In this case, although the electrical connection between the electrode pattern 1390 and the electrode pattern 1690 is not disconnected, a predetermined displacement may occur in the movable bracket 1300 due to a shape deformation of the elastic member 1800 having a predetermined elasticity. When a displacement occurs in the movable bracket 1300, a displacement may also occur in the magnetic body 1400 accommodated within the movable bracket 1300 to change the value of the inductance L of the inductor unit 1200.

When the external force applied to the movable bracket 1300 synchronized with the movement of the core 1020 is greater than the elastic force by which the partially pressed elastic body 1700 pushes the movable bracket 1300 in an outward direction, the elastic body 1700 is pressed, the movable bracket 1300 is moved in the same direction as the external force, and the electrical connection between the electrode pattern 1390 and the electrode pattern 1690 is disconnected. When the electrical connection between the electrode pattern 1390 and the electrode pattern 1690 is disconnected, which will be described later, the value of the capacitance C is changed because an electrical connection between an auxiliary capacitor Cs and a plurality of base capacitors is disconnected. In this case, as the core 1020 is moved, the value of the inductance L of the inductor unit 1200 may be changed.

Referring to FIG. 14B, when a predetermined force is applied to the core 1020 to move the core 1020 in one direction, the movable bracket 1300 is moved in conjunction with the core 1020 in the one direction. As the movable bracket 1300 is moved in the one direction, the second protrusion 1330b is also moved in the one direction. As the second protrusion 1330b is moved, the contact between the electrode pattern 1390 of the movable bracket 1300 and the electrode pattern 1690 of the fixing bracket 1600 is released. Similarly, as the first protrusion 1330a disposed at a side opposed to the second protrusion 1330b is also moved, the contact between the electrode pattern 1390 of the movable bracket 1300 and the electrode pattern 1690 of the fixing bracket 1600 is released. Also, as the movable bracket 1300 is moved, the elastic body 1700 is pressed.

As illustrated in FIG. 14B, when a predetermined force is applied to the core 1020 to move the core 1020 in one direction, a contact between the electrode pattern 1390 of the movable bracket 1300 and the electrode pattern 1690 of the fixing bracket 1600 is released. The release of the contact causes a sharp change in capacitance of the capacitor unit (not shown) mounted to the substrate 2100. The sharp change of the capacitance changes a frequency of a pen signal emitted from the stylus pen 1000. The receiver that receives the pen signal may determine whether the stylus pen 1000 is brought into contact with a screen by detecting a changed frequency.

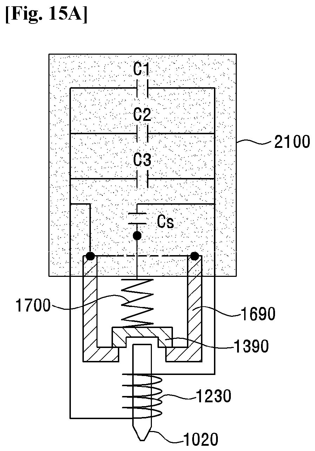

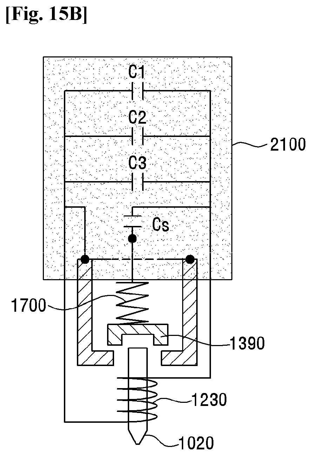

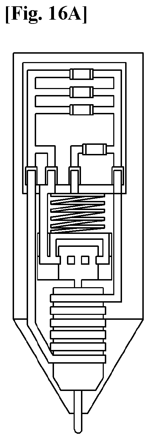

FIGS. 15A and 15B are schematic views of FIGS. 14A and 14B, respectively, and FIGS. 16A to 16C are a schematic view of a stylus pen according to another embodiment of the present disclosure and equivalent circuit diagrams respectively corresponding to FIGS. 14A and 14B.

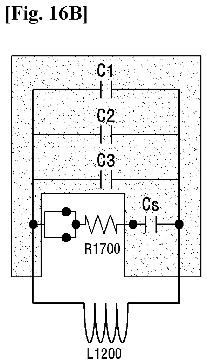

Referring to FIGS. 15A and 15B and FIGS. 16A and 16B, a plurality of capacitors C1, C2, C3, and Cs are arranged on the substrate 2100. The capacitors C1, C2, C3, and Cs may form a capacitor unit (not shown). At least one or more capacitors C1, C2, and C3 of the plurality of capacitors C1, C2, C3, and Cs are connected in parallel to maintain a constant capacitance value, and the auxiliary capacitor Cs is connected in parallel to the base capacitor according to the contact or contact release between the electrode pattern 1690 of the fixing bracket 1600 and the electrode pattern 1390 of the movable bracket 1300 as in FIGS. 14A and 14B.

First, as illustrated in FIGS 15A and 16B, since the electrode pattern 1690 of the fixing bracket 1600 and the electrode pattern 1390 of the movable bracket 1300 are in contact with each other in a state in which any external force is not applied to the core 1020, the auxiliary capacitor Cs is connected in parallel to the base capacitors C1, C2, and C3. Thus, a capacitance of the capacitor unit (not shown) is a sum of capacitance values of the base capacitors C1, C2, and C3 and the auxiliary capacitor Cs.

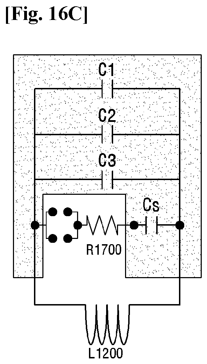

Thereafter, as illustrated in FIGS. 15B and 16C, when a predetermined external force is applied to the core 1020, the contact between the electrode pattern 1690 of the fixing bracket 1600 and the electrode pattern 1390 of the movable bracket 1300 is released by the movement of the movable bracket 1300 synchronized with the movement of the core 1020. Thus, the auxiliary capacitor Cs is not electrically connected to the base capacitors C1, C2, and C3, and the capacitance of the capacitor unit (not shown) is changed to capacitance values of the base capacitors C1, C2, and C3.

In particular, referring to FIG. 16C, it may be known that the electrode pattern 1390 of the movable bracket 1300 is in contact with the electrode pattern 1690 of the fixing bracket 1600 at two points. As illustrated in FIGS. 9 and 10, it may be understood that the fixing bracket 1600 has two electrode patterns 1690, and the first and second extension patterns 1393a and 1393b are arranged on the first and second protrusions 1330a and 1330b of the movable bracket 1300.

When the external force applied to the core 1020 is insufficient to separate both the first and second extension patterns 1393a and 1393b from two electrode patterns 1690 of the fixing bracket 1600, i.e., when the first extension pattern 1393a is separated from one electrode pattern 1690 of the fixing bracket 1600 while the second extension pattern 1393b is not separated from the other electrode pattern 1690 of the fixing bracket 1600, the auxiliary capacitor Cs remains connected in parallel to the base capacitors C1, C2, and C3.

On the other hand, only when the external force applied to the core 1020 is sufficient to completely separate both the first and second extension patterns 1393a and 1393b from the two electrode patterns 1690 of the fixing bracket 1600, the auxiliary capacitor Cs is electrically disconnected from the base capacitors C1, C2, and C3. Also, as previously described, when the movable bracket 1300 further includes additional protrusion (not shown) in addition to the first and second protrusions 1330a and 1330b, and the base electrode pattern 1391 further includes one or more extension patterns (not shown) in addition to the first and second extension patterns 1393a and 1393b, the auxiliary capacitor Cs is electrically disconnected from the base capacitors C1, C2, and C3 only when all of the plurality of extension patterns are completely separated from the electrode pattern 1690.

Thus, when the stylus pen 1000 according to another embodiment of the present disclosure is used, there is an advantage in that the hover state and the contact state may be clearly distinguished by clearly setting a reference pressure that distinguishes the hover state and the contact state. In particular, since the stylus pen 1000 according to another embodiment of the present disclosure may still maintain the contact state between the rest extension pattern and the rest electrode pattern although one extension pattern of the first and second extension patterns 1393a and 1393b is not in contact with one of the two electrode patterns 1690 of the fixing bracket 1600 due to a limitation in manufacturing process while manufacturing the stylus pen or carelessness of a user while using the stylus pen.

Operation of stylus pen according to movement of core

Hereinafter, an operation of the stylus pen according to the movement of the core for distinguishing hover, contact, pressure, and button states according to an embodiment of the present disclosure will be described.

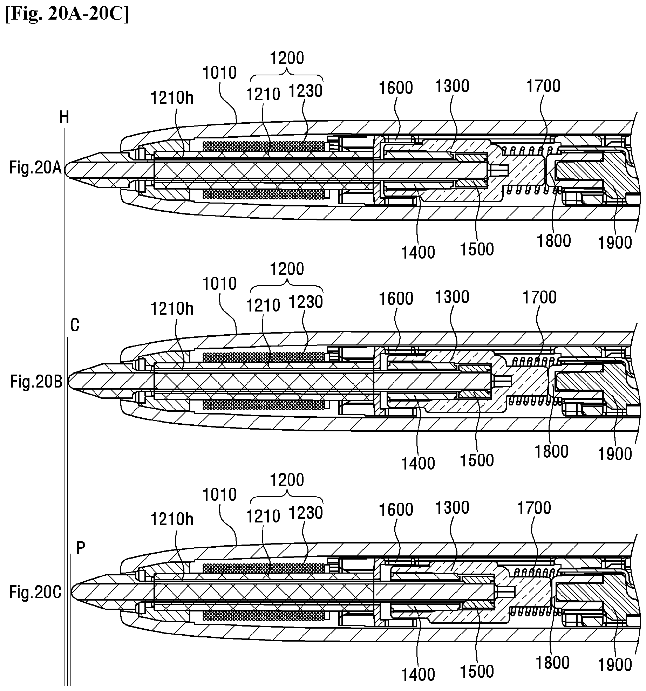

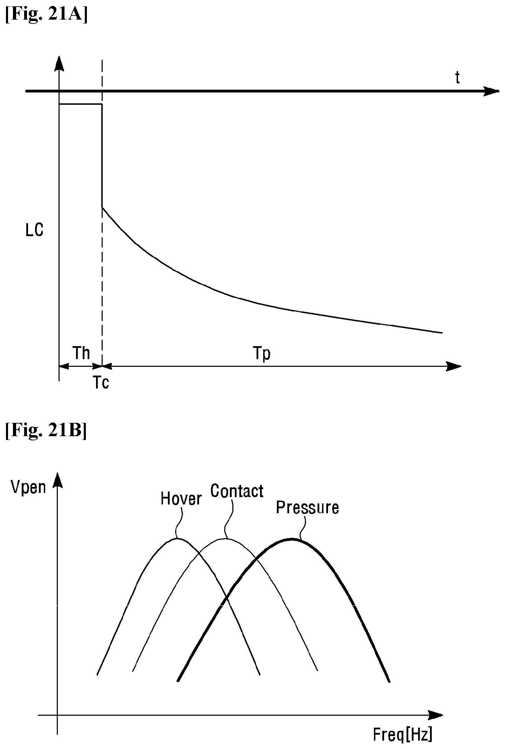

Hereinafter, an operation of the stylus pen 100 or the stylus pen 1000 according to an embodiment of the present disclosure will now be described with reference to FIGS. 20A to 20C, 21A, and 21B.

FIGS. 20A to 20C are views for explaining an operation of the stylus pen according to an embodiment of the present disclosure. Specifically, FIG. 20A is a view illustrating a hover state H of the stylus pen, FIG. 20B is a view illustrating a contact state C of the stylus pen, and FIG. 20C is a view illustrating a pressure state P of the stylus pen.

In the hover state H, it may be recognized that a signal from the stylus pen is not received by the touch input device, or the stylus pen is not in contact with the touch input device although the signal is received. For example, when no external force is applied to the core 1020, or when the magnitude of the external force applied to the core 1020 is less than the elastic force by which the pressed elastic body 1700 pushes the movable bracket 1300 in the outward direction, the stylus pen may be recognized as being in the hover state H.

Referring to FIGS. 14A and 20A, when no external force is applied to the core 1020, the stylus pen may be recognized as being in the hover state H. In this case, there is no change in the internal components. No shape deformation occurs in the elastic member 1800, and the electrical connection between the electrode pattern 1390 of the movable bracket 1300 and the electrode pattern 1690 of the fixing bracket 1600 is not disconnected. Since no positional change between the magnetic body 1400 and the inductor unit 1200 occurs, the value of the inductance L remains constant. Thus, as both the value of the inductance L of the inductor unit 1200 and the value of the capacitance C of the capacitor unit remain constant, the resonance frequency of the resonance circuit is constantly maintained.

Referring again to FIGS. 14A and 20A, although a predetermined external force is applied to one end of the core 1020 in the hover state H, when the magnitude of the applied predetermined external force is less than the elastic force by which the pressed elastic body 1700 pushes the movable bracket 1300 in the outward direction, the stylus may be recognized as being in the hover state H. Since the external force applied to the core 1020 is less than the elastic force of the elastic body 1700, the elastic body 1700 is not pressed, no movement of the movable bracket 1300 occurs, and thus there is no change in the internal components. Since no shape deformation of the elastic member 1800 occurs, and the electrical connection between the electrode pattern 1390 of the movable bracket 1300 and the electrode pattern 1690 of the fixing bracket 1600 is not disconnected, there is no change in the capacitance of the capacitor unit (not shown). Also, since no change occurs in positions of the magnetic body 1400 and the inductor unit 1200, the value of the inductance L also remains constant. Thus, as both the value of the inductance L of the inductor unit 1200 and the value of the capacitance C of the capacitor unit remain constant, the resonance frequency of the resonance circuit is constantly maintained.

In the contact state C, it may be recognized the signal from the stylus pen is received by the touch input device, and the stylus pen is in contact with the touch input device. For example, when the magnitude of the external force applied to the core 1020 is equal to or greater than the elastic force by which the pressed elastic body 1700 pushes the movable bracket 1300 in the outward direction, the stylus pen may be recognized as being in the contact state C.

Referring to FIGS. 14B and 20B, since, in the contact state C, the external force applied to the movable bracket 1300 synchronized with the movement of the core 1020 is equal to or greater than the elastic force by which the partially pressed elastic body 1700 pushes the movable bracket 1300 in the outward direction, the movable bracket 1300 is moved in the same direction as the external force, and the contact between the electrode pattern 1390 of the movable bracket 1300 and the electrode pattern 1690 of the fixing bracket 1600 is released. As illustrated in FIGS. 14A and 14B, 15A and 15B, and 16A to 16C, when the contact between the electrode pattern 1390 and the electrode pattern 1690 is released, the electrical connection of the auxiliary capacitor Cs connected in parallel to the base capacitors C1, C2, and C3 in the capacitor unit (not shown) mounted on the substrate 2100 is disconnected due to the release of the contact. Thus, total value of the capacitance of the capacitor unit decreases.

As the movable bracket 1300 is moved in the same direction as the external force, the elastic member 1800 is pressed and deformed in shape by the external force transmitted to the movable bracket 1300 that operates in conjunction with the core 1020. Due to the shape deformation of the elastic member 1800, a predetermined displacement occurs in the movable bracket 1300, and a predetermined display also occurs in the magnetic body 1400 accommodated in the movable bracket 1300. The value of the inductance L of the inductor unit 1200 is changes based on the displacement of the magnetic body 1400. In this case, since both the total value of the capacitance of the capacitor unit (not shown) and the value of the inductance L of the inductor unit 1200 are changed together, the resonance frequency of the resonance circuit may be changed. Although the total value of the capacitance and the value of the inductance are changed together in the contact state C, the change in the value of the capacitance may be greater than the change in the value of the inductance. In this case, the change in the value of the capacitance may predominantly act on the change in the value of the LC.

In the pressure state P, it may be recognized that the signal from the stylus pen is received by the touch input device, and the stylus pen in the pressed state is brought into contact with the touch input device. For example, when the magnitude of the external force applied to the core 1020 is greater than the elastic force by which the pressed elastic body 1700 pushes the movable bracket 1300 in the outward direction, the stylus pen may be recognized as being in the pressure state P.

Referring to FIG. 20C, in the pressure state P, greater external force is applied to one end of the core 1020 than that in the contact state c. In the pressure state P, even after the contact between the electrode pattern 1390 and the electrode pattern 1690 is released, the elastic member 1800 is further pressed by the external force applied to the one end of the core 1020, and the shape deformation of the pressed elastic member 1800 causes the movable bracket 1300 to be moved further in an inward direction of the housing 1010. As the movable bracket 1300 is moved in the pressure state P, a displacement occurs in the magnetic body 1400 accommodated in the movable bracket 1300, and the value of the inductance L gradually decreases because the magnetic body 1400 is moved away from the inductor unit 1200. In this case, although the value of the capacitance is constant after the contact between the electrode pattern 1390 and the electrode pattern 1690 is released, since the value of the inductance is changed, the resonance frequency of the resonance circuit may be changed. Accordingly, in this case, the change in the value of the inductance may predominantly act on the change in the value of the LC.

FIG. 21A is a graph showing, e.g., the change in the value of the LC of the resonance circuit unit based on operations in FIGS. 20A to 20C. Here, a Th section represents the hover state H of FIG. 20A, a Tc point represents the contact state C of FIG. 20B, and a Tp section represents the pressure state P of FIG. 20C. FIG. 21B is a graph showing frequency characteristics of each operating state in FIGS. 20A to 20C.

Referring to FIG. 21A, the value of the LC of the resonance circuit unit including the capacitor unit (not shown) and the inductor unit 1200 remains constant during the Th section. Since the core 1020 of the stylus pen is not in contact with a touch surface in the Th section, any external force may not be applied to the core 1020. Alternatively, although the core 1020 of the stylus pen is in contact with the touch surface, the magnitude of the external force applied to the core 1020 may be less than the elastic force by which the pressed elastic body 1700 pushes the movable bracket 1300 in the outward direction.

In the Th section, since the predetermined external force applied to the core 1020 is less than the elastic force of the elastic body 1700, the elastic body 1700 is not pressed, and the electrical connection between the electrode pattern 1390 of the movable bracket 1300 and the electrode pattern 1690 of the fixing bracket 1600 is not disconnected. Thus, the total value of the capacitance of the capacitor unit (not shown) is not changed. Also, since no shape deformation occurs in the elastic member 1800, the movable bracket 1300 is not moved, and there is no change in a distance between the magnetic body 1400 accommodated in the movable bracket 1300 and the inductor unit 1200. Thus, the value of the inductance of the inductor unit 1200 is not changed. Therefore, the resonance frequency of the resonance circuit remains constant.

Referring to FIG. 21A, the value of the LC of the resonance circuit may sharply decrease in the Tc section (or point in time). In the Tc section (or point in time), after the core 1020 is brought into contact with the touch surface, the magnitude of the external force applied to the core 1020 may be equal to or greater than the elastic force by which the pressed elastic body 1700 pushes the movable bracket 1300 in the outward direction.

At the Tc section (or point in time), when the external force equal to or greater than the elastic force by which the pressed elastic body 1700 pushes the movable bracket 1300 in the outward direction is applied to the core 1020 after the core 1020 is brought into contact with the touch surface, the contact between the electrode pattern 1390 of the movable bracket 1300 and the electrode pattern 1690 of the fixing bracket 1600 is released. Due to the release of the contact, the electrical connection of the auxiliary capacitor Cs connected in parallel to the base capacitors C1, C2, and C3 in the capacitor unit (not shown) mounted on the substrate 2100 is disconnected. Thus, the total value of the capacitance of the capacitor unit (not shown) decreases. Also, the elastic member 1800 is pressed and deformed in shape by the external force transmitted to the movable bracket 1300 that operates in conjunction with the core 1020. The shape deformation of the elastic member 1800 causes a movement of the movable bracket 1300 and a change in the distance between the magnetic body 1400 accommodated in the movable bracket 1300 and the inductor unit 1200. Thus, the value of the inductance value of the inductor unit 1200 decreases. As both the capacitance value and inductance value change, the resonance frequency of the resonance circuit decreases.

According to an embodiment of the present disclosure, although the value of the inductance is also changed at the Tc section (or point in time), since the value of the capacitance is sharply changed, the change in the value of the capacitance dominantly acts on the change in the value of the LC.

Referring to FIG. 21A, the value of the LC of the resonance circuit unit including the capacitor unit (not shown) and the inductor unit 1200 gradually decreases during the Tp section as the pressure increases. In the Tp section, after the core 1020 is brought into contact with the touch surface, the magnitude of the external force applied to the core 1020 is greater than the elastic force by which the pressed elastic body 1700 pushes the movable bracket 1300 in the outward direction.

In the Tp section, even after the contact between the electrode pattern 1390 of the movable bracket 1300 and the electrode pattern 1690 of the fixing bracket 1600 is released, the elastic member 1800 may be further pressed by the external force applied to the one end of the core 1020, and the shape deformation of the pressed elastic member 1800 may cause the movable bracket 1300 to be moved further in the inward direction of the housing 1010. In this case, since the magnetic body 1400 accommodated in the movable bracket 1300 is moved further away from the inductor unit 1200 as the pressure is applied to the core 1020, the value of the inductance further decreases, and accordingly, the value of the LC of the resonance circuit unit further decreases. That is, in this section Tp, as the pressure applied to the core 1020 increases, the value of the LC of the resonance circuit unit may gradually decrease. However, since the total value of the capacitance remains constant although the value of the inductance decreases in this section Tp, a dominant factor that determines the value of the LC is the inductance. Accordingly, in this section Tp, the change in the inductance according to the applied pressure dominantly acts on the change in the value of the LC.

Referring to FIG. 21A, the value of the LC of the resonance circuit unit is shown such that hover state H > contact state c > pressure state P. When the value of the inductance of the inductor unit 1200 and the value of the capacitance of the capacitor unit (not shown) are changed, the resonance frequency and a Q value of the resonance circuit unit may be also changed. The resonance frequency of the resonance circuit unit increases as the inductance of the resonance circuit unit decreases, and the Q value decreases as the inductance decreases. Thus, as illustrated in FIG. 21B, a resonance signal Vpen output from the resonance circuit unit may exhibits frequency characteristics such that, as the movement distance of the core 1020 increases, i.e., the pressure increases, the resonance frequency increases (hover state < contact state < pressure state), and the Q value decreases (hover state > contact state > pressure state).

When the resonance frequency of the resonance circuit unit is changed, a phase of an electromagnetic signal output from the stylus pen 1000 is changed. Based on the changed phase, a stylus pen sensing device that interacts with the stylus pen 1000 may calculate the change in the value of the LC of the resonance circuit unit, and, based on this, whether the stylus pen 1000 is in contact with the stylus pen sensing device and the pressure thereof may be detected.

As described above, the stylus pen 1000 according to an embodiment of the present disclosure may change at least one of the value of the inductance and the value of the capacitance of the resonance circuit unit to detect the pressure in the stylus pen sensing device (e.g., the touch input device or touch panel). Also, the stylus pen 100 has an advantage of sensing a precise pressure. Also, although a predetermined pressure is applied in the contact state C, when the predetermined pressure is less than the elastic force of the elastic body 1700, the electrical connection of the auxiliary capacitor Cs is not disconnected. Thus, there is an advantage of more precisely distinguishing the contact state C from the pressure state P.

Distinguishment between hover, contact, and pressure states at low reference pressure

Referring to FIGS. 14A and 14B, the elastic body 1700 may be a spring. The elastic body 1700 may be initiated to be pressed even under a low pressure (e.g., about 10 gf or 5gf) and pressed quickly even when a pressure slightly increases due to a low compression strength thereof.

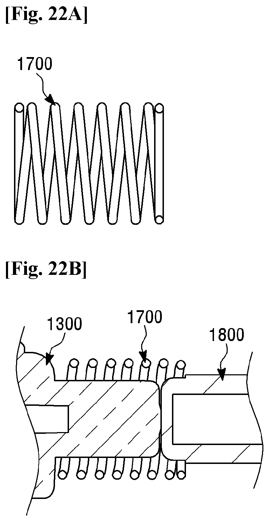

FIGS. 22A and 22B are views for explaining the elastic body 1700 and the elastic member 1800 in FIG. 9. FIG. 22A is a view illustrating a state in which no external force is applied to the elastic body 1700 or in which the magnitude of the external force applied to the elastic body 1700 is less than the elastic force by which the pressed elastic body 1700 pushes the movable bracket 1300 in the outward direction, and FIG. 22B is a view illustrating a state in which a contact surface between the movable bracket 1300 and the elastic member 1800 in FIG. 9 is disposed in the elastic body 1700. According to FIG. 11 and FIG. 22B, the extension part 1370 of the movable bracket 1300 and the extension part 1870 of the elastic member 1800 may be disposed together in the elastic body 1700.

As illustrated in FIG. 22B, the elastic body 1700 may be inserted between the movable bracket 1300 and the elastic member 1800 in a partially pressed (or incompletely pressed) state. The elastic body 1700 may respond to a relatively greater weight than that of the elastic member 1800. The elastic body 1700 is not pressed when a force (or repulsive force) equal to or greater than a force pressed by the movable bracket 1300 and the elastic member 1800 is not applied. Here, although the force (or repulsive force) may be, e.g., about 10 gf, the embodiment of the present disclosure is not limited thereto. For example, the force may have a smaller value such as 5 gf. The force (or restoring force) may be calculated and adjusted by using [Equation 1] below.

[Equation 1]

$$F = -kx = -\frac{Gd^4}{8NaD^3}x$$

In the [Equation 1], G represents a transverse elastic modulus of a spring, Na represents an effective number of winding of the spring, D represents a diameter of the spring, d represents a diameter of a wire, and x represents a pressed (-direction) length of the spring.

When a magnitude F of the force (or repulsive force) calculated based on the [Equation 1] is adjusted to be small, a force required to transfer from the hover state H to the contact state C may be adjusted to be weak. Accordingly, the hover state and the contact state of the stylus pen may be clearly distinguished even at a low reference pressure.

When the magnitude F of the force (or repulsive force) calculated based on the [Equation 1] is adjusted to be large, the force required to transfer from the hover state H to the contact state C may be adjusted to be strong. Accordingly, the hover state and the contact state of the stylus pen may be clearly distinguished even at a high reference pressure.

When the magnitude F of the force (or repulsive force) calculated based on the [Equation 1] is adjusted to be extremely small, the force required to transfer from the hover state H to the contact state C may be adjusted to be extremely weak. Accordingly, the hover state and the contact state of the stylus pen may be clearly distinguished even at an extremely low reference pressure.

On the other hand, the elastic member 1700 in a non-pressed state may be disposed between the movable bracket 1300 and the elastic element 1800. Although, in the stylus pen according to another embodiment of the present disclosure, a portion of the elastic body 1700 in the pressed state is disposed between the movable bracket1300 and the elastic member 1800, the embodiment of the present disclosure is not limited thereto.

Effects according to internal configuration of stylus pen

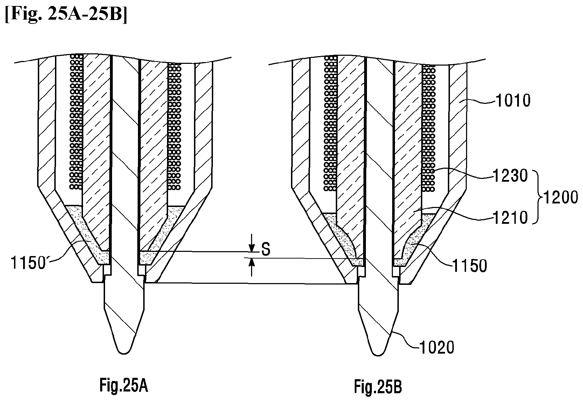

FIGS. 25A and 25B are views illustrating an internal configuration of the stylus pen according to an embodiment of the present disclosure and effects thereof. Specifically, FIG. 25B is a cross-sectional view of the stylus pen according to an embodiment of the present disclosure, and FIG. 25A is a cross-sectional view of a conventional stylus pen.

Referring to FIGS. 25A and 25B, the stylus pen according to an embodiment of the present disclosure in FIG. 25B may include the ferrite core 1210 that is disposed lower by a predetermined height S than a ferrite core in FIG. 25A.

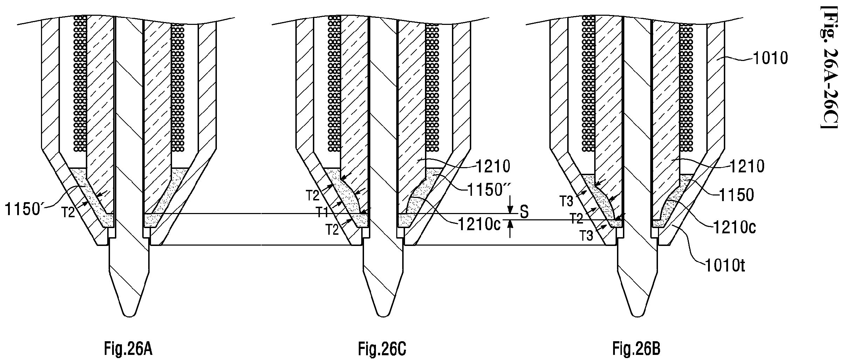

According to this configuration, when the stylus pen according to an embodiment of the present disclosure is used, the inductor unit 1200 including the ferrite core 1210 may be disposed closer to the receiver (not shown) disposed below the core 1020 of the stylus pen. Thus, there is an advantage in that a magnitude of a pen signal detected by the receiver increases. This is because a thickness (between inner and outer surfaces) of the buffer member 1150 may be reduced by a shape of the ferrite core 1210 of the stylus pen according to an embodiment of the present disclosure. Hereinafter, a detailed description will be provided with reference to FIGS. 26A to 26C.

FIGS. 26A to 26C are views for explaining in more detail the internal configuration of the stylus pen according to an embodiment of the present disclosure and the effects thereof. Specifically, FIG. 26A is the same as FIG. 25A, FIG. 26B is the same as FIG. 25B, and FIG. 26C is a view illustrating a state in which the ferrite core 1210 is disposed at the same position as the ferrite core in FIG. 26A.

Referring to FIG. 26A, a buffer member 1150' has a constant thickness T2 between inner and outer surfaces thereof. As the thickness T2 is gradually minimized, the ferrite core may be moved as low as possible in the tapered portion of the housing. However, the thickness T2 has a limitation due to a structure of the buffer member 1150' or other manufacturing processes.

Here, when it is assumed that the thickness T2 is a minimum thickness of the buffer member 1150' due to the structure of the buffer member 1150' or other manufacturing processes, FIG. 26A shows a case in which the conventional ferrite core is disposed at a lowest position in the housing.

Referring to FIG. 26C, the ferrite core 1210 is disposed at the same position as the ferrite core in FIG. 26A. Here, since the ferrite core 1210 has a curved portion 1210c, a buffer member 1150" is different in configuration from the buffer member 1150' in FIG. 26A. Specifically, an inner surface of the buffer member 1150" has a protruding curved surface in correspondence to the curved portion 1210c of the ferrite core 1210.

A thickness between an outer surface and a curved inner surface of the buffer member 1150" is changed based on positions. Specifically, each of upper and lower ends of the inner surface of the buffer member 1150" has the minimum thickness T2 from the outer surface, and an intermediate portion of the inner surface of the buffer member 1150" has a thickness between T2 and T1 (where, T1 > T2).

In FIG. 26C, at least one portion (upper and lower ends) of the buffer member 1150" satisfies the minimum thickness T2, and the intermediate portion of the buffer member 1150" has the thickness T1 greater than the minimum thickness T2. As described above, since the thickness T1 of the intermediate portion of the buffer member 1150" is greater than the minimum thickness T2, there is an advantage in that the buffer member 1150" is easier to be manufactured than the conventional buffer member 1150' in FIG. 26A.

Referring to FIG. 26B, an inner surface of the buffer member 1150 is formed into a curved surface by the curved portion 1210c of the ferrite core 1210. Each of upper and lower ends of the inner surface of the buffer member 1150 has a thickness T3 (T3<T2) from the outer surface of the buffer member 1150, and an intermediate portion of the inner surface of the buffer member 1150 has a thickness between T3 and T2 from the outer surface of the buffer member 1150.

In FIG. 26B, although the upper and lower ends of the buffer member 1150 do not satisfy the minimum thickness T2, since the intermediate portion of the buffer member 1150 satisfies the minimum thickness T2, the buffer member 1150 may be manufactured. Since the buffer member 1150 manufactured as described above has the minimum thickness less than that of each of the buffer members 1150' and 1150" in FIGS. 26A and 26C, a volume of the buffer member 1150 may be further reduced. Thus, the buffer member 1150 may be moved further downward in the tapered portion 1010t of the housing 1010. Accordingly, the ferrite core 1210 may be disposed lower by a predetermined height S than those in FIG. 26A or FIG. 26C.

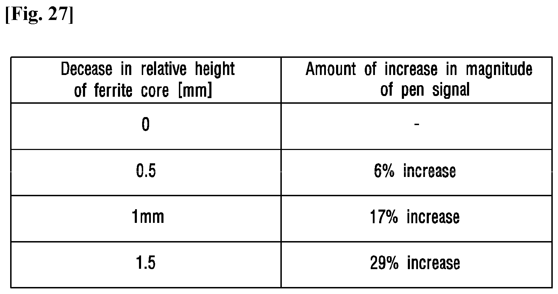

FIG. 27 is a table for explaining an amount of increase in magnitude of a pen signal according to the predetermined height S in FIGS. 26A to 26C.

Referring to the table in FIG. 27, it may be known that the magnitude of the pen signal received by the receiver increases as the predetermined height S increases.

As described above, when the above-described ferrite core 1210 is used, since the thickness of the buffer member 1150 may be further reduced, the ferrite core 1210 may be disposed closer to an end of the pen 1020 in the housing 1010. Thus, the receiver that receives the pen signal emitted from the stylus pen 1000 according to an embodiment of the present disclosure may obtain a greater pen signal to improve sensing sensitivity of the stylus pen.

Method for manufacturing stylus pen

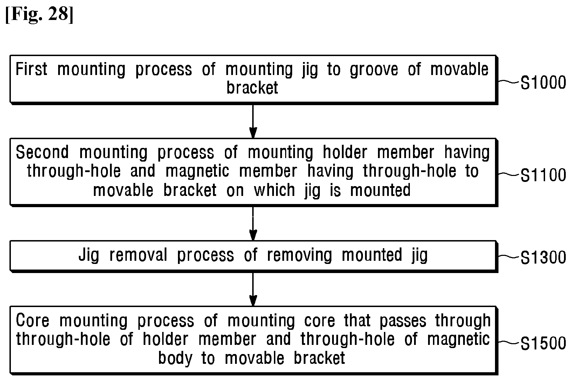

FIG. 28 is a flowchart representing a method for manufacturing the stylus pen 1000 in FIG. 3.

Referring to FIG. 28, the method for manufacturing the stylus pen 1000 may include: a first mounting process S1000 of mounting a jig 1301 to a groove 1340 of a movable bracket 1300; a second mounting process S1100 of mounting a holder member 1500 having a through-hole and a magnetic body 1400 having a through-hole to the movable bracket 1300 on which the jig 1301 is mounted; and a jig removal process S1300 of removing the mounted jig 1301.

Also, the method may further include a core mounting process S1500 of mounting a core 1020 that passes through the through-hole of the holder member 1500 and the through-hole of the magnetic body 1400 to the movable bracket.

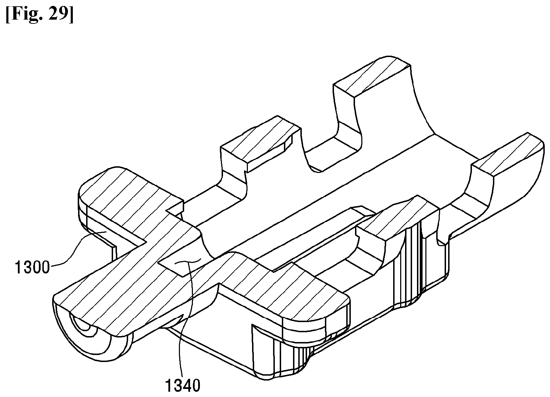

Hereinafter, each of the processes of the method for manufacturing the stylus pen 1000 will be described in detail with reference to FIGS. 29 to 33.

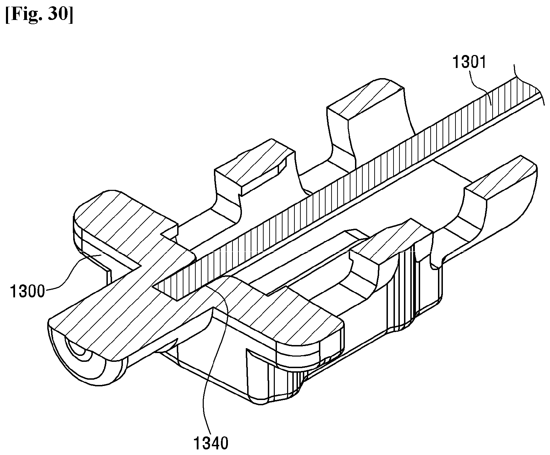

FIG. 29 is a cross-sectional view illustrating the movable bracket 1300 disposed in the stylus pen 1000 in FIG. 3, and FIG. 30 is a view for explaining the first mounting process S1000 in FIG. 28.

Referring to FIG. 29, the movable bracket 1300 may include an extension part 1370. Also, the movable bracket 1300 may include an accommodation part for accommodating the other end of the core 1020, the magnetic body 1400, and the holder member 1500.

The movable bracket 1300 may have a groove to which the jig 1301 is mounted. The jig 1301 that is an auxiliary tool used to improve productivity, accuracy, and precision during a manufacturing process of the stylus pen 1000 may induce consistent and accurate arrangement of components. The jig 1301 may be temporarily mounted for stable mounting of the holder member 1500 and the magnetic body 1400 and then removed.

The groove 1340 may have a shape that is recessed in a direction from an accommodation part of the movable bracket 1300 toward an extension part 1370 or recessed in a longitudinal direction of the core 1020. The groove 1340 may be defined in a side surface of the other end of the core accommodated in the movable bracket 1300. The groove 1340 may have a shape corresponding to an outer surface of the jig 1301 so that the jig 1301 is smoothly mounted.

Referring to FIG. 30, it may be known that the jig 1301 is mounted to the groove 1340 of the movable bracket 1300. As illustrated in FIG. 30, the jig 1301 may have a constant width and a constant length and have a cylindrical shape. However, the embodiment of the present disclosure is not limited thereto. For example, the jig may have a polygonal column shape.

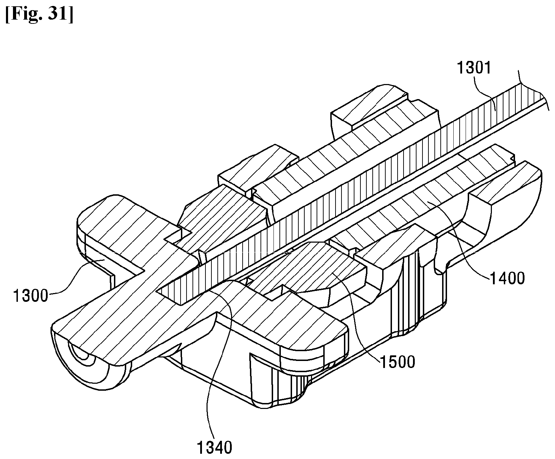

FIG. 31 is a view for explaining the second mounting process S1100 in FIG. 28.

The holder member 1500 and the magnetic body 1400 may be mounted to the movable bracket 1300 to which the jig 1301 is mounted. The holder member 1500 may have a container shape having a through-hole through which the other end of the core 1020 passes, and the jig 1301 may pass through the through-hole. The magnetic body 1400 may also have a container shape and include a through-hole through which the other end of the core 1020 passes, and the jig 1301 may pass through the through-hole.

Since the jig 1301 is used for mounting the holder member 1500 and the magnetic body 1400, the holder member 1500 and the magnetic body 1400 may be stably mounted in the movable bracket 1300, and assembly deviation between the holder member 1500 and the magnetic body 1400 may be reduced.

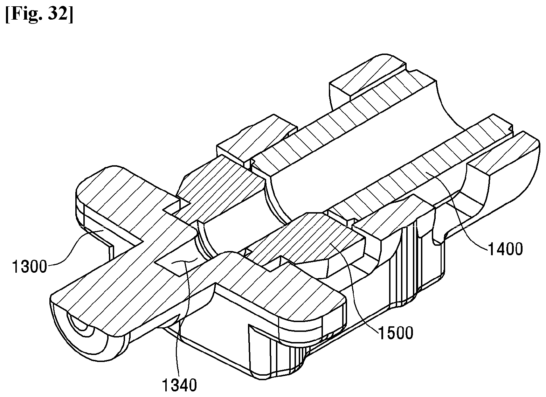

FIG. 32 is a view for explaining the jig removal process S1300 in FIG. 28.

After the holder member 1500 and the magnetic body 1400 are mounted, the jig 1301 may be removed from the movable bracket 1300. After the jig 1301 is removed, only the holder member 1500 and the magnetic body 1400 may remain in the accommodation part of the movable bracket 1300.

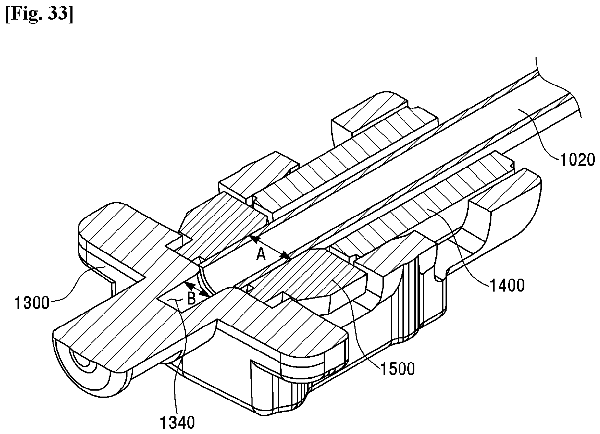

FIG. 33 is a view for explaining the core mounting process S1500 in FIG. 28.

The core 1020 may be mounted to the movable bracket 1300. Specifically, as the other end of the core 1020 passes through the through-hole of the holder member 1500 and the through-hole of the magnetic body 1400 accommodated in the accommodation part of the movable bracket 1300, the core 1020 may be mounted to the movable bracket 1300.

In FIG. 33, reference numeral A represents a width of the core 1020, and reference numeral B represents a width of the groove 1340. The width of the core 1020 may be greater than that of the groove 1340 or the width of the jig 1301. Since the core 1020 has the width greater than that of the groove 1340, the other end of the core in not inserted into the groove 1340 of the movable bracket 1300. Also, since the core 1020 has the width greater than that of the jig 1301, a distance between the holder member 1500 and the core 1020 and a distance between the magnetic body 1400 and the core 1020 may be reduced.

When the stylus pen 1000 is manufactured by using the above-described method, there is an advantage of reducing an assembly deviation between the movable bracket 1300, the holder member 1500, the magnetic body 1400, and core 1020 and reducing a defect rate by improving convenience in process.

The stylus pen according to the embodiment of the present disclosure has the improved performance of distinguishing the hover, contact, pressure, and button operations.

Also, the stylus pen according to the embodiment of the present disclosure has the improved performance of distinguishing the hover state and the contact state even at the low reference pressure.

The stylus pen according to the embodiment of the present disclosure may be used to reduce the inner volume of the pen. Accordingly, the stylus pen may be miniaturized.

Also, the method for manufacturing the stylus pen according to the embodiment of the present disclosure may be used to stably manufacture the stylus pen.

Also, the inductor unit may be stably accommodated in the housing.

Features, structures, and effects described in the above embodiments are incorporated into at least one embodiment of the present disclosure, but are not limited to only one embodiment. Moreover, features, structures, and effects exemplified in one embodiment can easily be combined and modified for another embodiment by those skilled in the art. Therefore, these combinations and modifications should be construed as falling within the scope of the present disclosure.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1.  A stylus pen comprising:

    a housing;
    a core having one end disposed outside the housing and the rest portion disposed in the housing and moved along a longitudinal direction by an external force applied to the one end;
    an inductor unit disposed in the housing;
    a capacitor unit disposed in the housing to form a resonance circuit with the inductor unit;
    a movable bracket disposed in the housing and disposed at the other end of the core to operate in conjunction with the core; and
    a magnetic body disposed in the movable bracket,
    wherein a movement of the movable bracket caused by a movement of the core changes at least one of a capacitance of the capacitor unit and an inductance of the inductor unit to change a resonance frequency of the resonance circuit.

2.  The stylus pen of claim 1, wherein a factor that gives a dominant effect on a change in the resonance frequency of the resonance circuit, among a change in the capacitance and a change in the inductance of the inductor unit, is determined based on a comparison between a magnitude of the external force applied to the one end of the core and a predetermined threshold.

3.  The stylus pen of claim 2, further comprising:

    an elastic member;
    a conductive elastic body having an inner empty space and electrically connected to the capacitor unit; and
    a fixing bracket fixed in the housing,
    wherein the fixing bracket comprises at least one first electrode pattern,
    the movable bracket comprises at least one second electrode pattern,
    at least a portion of the movable bracket and at least a portion of the elastic member are disposed in the inner empty space of the elastic body,
    the elastic body applies an elastic force to the movable bracket in an outward direction of the housing, and
    the predetermined threshold is determined based on an elastic force generated by at least one of the elastic member and the elastic body.

4.  The stylus pen of claim 3, wherein, when a magnitude of the external force applied to the one end of the core is less than a predetermined threshold, the elastic force forms a contact between the first electrode pattern and the second electrode pattern, and when the magnitude of the external force is equal to or greater than the predetermined threshold, the contact between the first electrode pattern and the second electrode pattern is released according to a movement of the core.

5.  The stylus pen of claim 4, wherein, when the magnitude of the external force is equal to or greater than the predetermined threshold, a factor that gives a dominant effect on the change in the resonance frequency of the resonance circuit at a point in time when the contact between the first electrode pattern and the second electrode pattern is released according to the movement of the core is the change in the capacitance.

6. The stylus pen of claim 4 or 5, wherein, when the magnitude of the external force increases after the contact between the first electrode pattern and the second electrode pattern is released according to the movement of the core, a factor that gives a dominant effect on the change in the resonance frequency of the resonance circuit is the change in the inductance.

7. The stylus pen of any of the claims 3 to 6, further comprising:

   a substrate bracket fixed in the housing and coupled to the other end of the fixing bracket; and
   a substrate on which the capacitor unit that forms the resonance circuit with the inductor unit is disposed and which is mounted to the substrate bracket.

8. The stylus pen of claim 7, wherein the elastic body has a spring shape,

   one end of the elastic body is connected to the at least one first electrode pattern,
   the other end of the elastic body is connected to a first terminal of the substrate, and
   the at least one second electrode pattern is respectively connected to at least one second terminal of the substrate.

9. The stylus pen of claim 8, wherein the capacitor unit comprises at least one capacitor and an auxiliary capacitor connected in parallel to one end of the at least one capacitor,

   the first terminal is connected in series to the auxiliary capacitor, and
   the at least one second terminal is connected in parallel to the other end of the at least one capacitor.

10. The stylus pen of claim 9, wherein, when the magnitude of the external force is equal to or greater than the predetermined threshold, after the contact between the first electrode pattern and the second electrode pattern is released according to the movement of the core, a connection of the auxiliary capacitor is disconnected.

11. The stylus pen of any of the claims 3 to 10, wherein the second electrode pattern is plated on a groove defined in an outer surface of the fixing bracket, and the first electrode pattern is plated on a groove defined in an outer surface of the movable bracket.

12. The stylus pen of claim 11, wherein the second electrode pattern has a shape having at least one bent portion.

13. The stylus pen of any of the claims 3 to 12, further comprising a holder member disposed in the movable bracket and having elasticity,

   wherein the holder member has an inner space in which at least a portion of the core is disposed, and
   the movement of the movable bracket is performed in conjunction with the movement of the core by the elasticity of the holder member.

[Fig. 1A]

[Fig. 1B]

[Fig. 1C]

[Fig. 1D]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12A]

[Fig. 12B]

[Fig. 13]

[Fig. 14A-14B]

Fig.14A

Fig.14B

[Fig. 15A]

[Fig. 15B]

[Fig. 16A]

[Fig. 16B]

[Fig. 16C]

[Fig. 17]

[Fig. 18A]

[Fig. 18B]

[Fig. 19A-19B]

1210d

1210c

1210c —1210d
1210h
④

1210c —1210d
1210h
③

1210c —1210d
1210h
②

1210c —1210d
1210h
①

X

Fig.19A

1210d

1210c

X

Fig.19B

[Fig. 20A-20C]

[Fig. 21A]

[Fig. 21B]

[Fig. 22A]

1700

[Fig. 22B]

1300          1700          1800

[Fig. 23]

[Fig. 24]

[Fig. 25A-25B]

Fig.25A                    Fig.25B

[Fig. 26A-26C]

Fig.26A　Fig.26C　Fig.26B

[Fig. 27]

| Decease in relative height of ferrite core [mm] | Amount of increase in magnitude of pen signal |
|:---:|:---:|
| 0 | - |
| 0.5 | 6% increase |
| 1mm | 17% increase |
| 1.5 | 29% increase |

[Fig. 28]

```
┌────────────────────────────────────────────────────┐
│ First mounting process of mounting jig to groove of │
│ movable bracket                                      │──S1000
└────────────────────────────────────────────────────┘
                          │
                          ▼
┌────────────────────────────────────────────────────┐
│ Second mounting process of mounting holder member   │
│ having through-hole and magnetic member having      │──S1100
│ through-hole to movable bracket on which jig is      │
│ mounted                                              │
└────────────────────────────────────────────────────┘
                          │
                          ▼
┌────────────────────────────────────────────────────┐
│ Jig removal process of removing mounted jig          │──S1300
└────────────────────────────────────────────────────┘
                          │
                          ▼
┌────────────────────────────────────────────────────┐
│ Core mounting process of mounting core that passes   │
│ through through-hole of holder member and through-   │──S1500
│ hole of magnetic body to movable bracket             │
└────────────────────────────────────────────────────┘
```

[Fig. 29]

[Fig. 30]

[Fig. 31]

[Fig. 32]

[Fig. 33]

Europäisches
Patentamt
European
Patent Office
Office européen
des brevets

# EUROPEAN SEARCH REPORT

**Application Number**

EP 25 18 6461

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2023 0147499 A (HIDEEP INC [KR]) 23 October 2023 (2023-10-23) | 1,2 | INV.<br>G06F3/0354 |
| A | * paragraphs [0092], [0093] - [0095], [0097], [0103], [0134] - [0135]; figures 5, 15 * | 3-13 | |
| | ----- | | |
| A | JP 2003 196014 A (AIPTEK INTERNATL INC) 11 July 2003 (2003-07-11) * paragraphs [0003] - [0011]; figure 1 * | 1-13 | |
| | ----- | | |

**TECHNICAL FIELDS SEARCHED (IPC)**

G06F

The present search report has been drawn up for all claims

| Place of search | Date of completion of the search | Examiner |
|---|---|---|
| Munich | 22 October 2025 | Seifert, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

        .............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 6461

This annex lists the patent family members relating to the patent documents cited in  the above-mentioned European search report.
The members are as contained in the European Patent Office EDP file on
The European Patent Office is in no way liable for these particulars which are merely given for the purpose of information.

22-10-2025

| Patent document cited in search report | Publication date | Patent family member(s) | Publication date |
|---|---|---|---|
| KR 20230147499 A | 23-10-2023 | NONE | |
| JP 2003196014 A | 11-07-2003 | JP 3895648 B2 | 22-03-2007 |
| | | JP 2003196014 A | 11-07-2003 |
| | | TW 541500 B | 11-07-2003 |

EPO FORM P0459

For more details about this annex : see Official Journal of the European Patent Office, No. 12/82

**EP 4 675 404 A1**

**Patent documents cited in the description**

- KR 1020240086959

- KR 1020240087303